# EUROPEAN PATENT APPLICATION

(11) **EP 4 636 980 A1**
(43) Date of publication of application: **22.10.2025**
(21) Application number: 23914485.0
(22) Date of filing: 14.12.2023
(51) Int. Cl.: H02J 7/00, H02P 27/06, H01M 10/42

(54) **BATTERY HEATING METHOD, BATTERY HEATING CIRCUIT, AND ELECTRIC DEVICE**

(30) Priority: 04.01.2023 WO PCT/CN2023/070256
(71) Applicant: Contemporary Amperex Technology (Hong Kong) Limited, Hong Kong (HK)
(72) Inventor: HUANG, Xiaojian, Ningde, Fujian 352100 (CN); CHEN, Xing, Ningde, Fujian 352100 (CN); YAN, Yu, Ningde, Fujian 352100 (CN); OUYANG, Shaocong, Ningde, Fujian 352100 (CN); WANG, Kexin, Ningde, Fujian 352100 (CN)
(74) Representative: Gong, Jinping
(86) International application number: PCT/CN2023/138901
(87) International publication number: WO 2024/146351

(57) **Abstract**

This application relates to a battery heating method, a battery heating circuit, and an electrical device. The method includes: obtaining a heating enable signal used for instructing a motor to heat a battery based on a heating circuit, and control an on-off state of a switching transistor in a switching circuit in response to the heating enable signal so that the motor heats the battery while keeping a current direction unchanged in each phase of stator winding of the motor, thereby increasing current harmonics of the stator winding of the motor, and in turn, dispersing vibration noise energy generated when the motor heats the battery. As can be seen, in contrast to the conventional technology, the vibration noise is relatively low when the motor heats the battery according to an embodiment of this application, thereby alleviating the vibration noise problem when the motor heats the battery.

## Description

### CROSS-REFERENCE TO RELATED APPLICATIONS

This application references PCT International Application No. PCT/CN2023/070256, filed on January 4, 2023 and entitled "BATTERY HEATING METHOD, BATTERY HEATING CIRCUIT, AND ELECTRICAL DEVICE", which is incorporated herein by reference in its entirety.

### TECHNICAL FIELD

This application relates to the technical field of motors, and in particular, to a battery heating method, a battery heating circuit, and an electrical device.

### BACKGROUND

With the rapid development of new energy technology, electrical devices powered by new energy are emerging in larger numbers. During the use of a new energy electrical device, it is sometimes necessary to control a motor to heat a battery, but the heating process generates large noise.

A conventional technique for alleviating the problem of large vibration noise generated during motor pulse heating is to add neutral points of the motor. However, in the conventional technology, a relatively high level of vibration noise still persists when the battery is heated by using a motor in which the neutral points are added.

### SUMMARY

In view of the above problem, this application provides a battery heating method, a battery heating circuit, and an electrical device to solve the problem of relatively large vibration noise generated when a motor heats a battery in the conventional technology.

According to a first aspect, this application provides a battery heating method. The method includes:
obtaining a heating enable signal, where the heating enable signal is used for instructing a motor to heat a battery based on a heating circuit, and the heating circuit includes the motor and a switching circuit connected separately to the motor and the battery, and
controlling an on-off state of a switching transistor in the switching circuit in response to the heating enable signal so that the motor heats the battery while keeping a current direction unchanged in each phase of stator winding of the motor.

In the technical solution according to this embodiment of this application, the heating enable signal used for instructing the motor to heat the battery based on the heating circuit is obtained, and the on-off state of the switching transistor in the switching circuit is controlled in response to the heating enable signal. In this way, the motor heats the battery while keeping the current direction unchanged in each phase of stator winding of the motor, thereby increasing current harmonics of the stator winding of the motor, and in turn, dispersing vibration noise energy generated when the motor heats the battery. As can be seen, compared with the conventional technology, the vibration noise is relatively low when the motor in an embodiment of this application heats the battery, thereby alleviating the vibration noise generated when the motor heats the battery.

In some embodiments, a current in each phase of stator winding changes cyclically. A current cycle of each phase of stator winding includes: a stator winding energy storage stage in which the current increases gradually, a stator winding freewheeling stage in which the current remains constant, a stator winding discharge stage in which the current decreases gradually, and a stator winding current interruption stage in which the current is zero.

In the technical solution according to this embodiment of this application, the current in each phase of stator winding changes cyclically, and the current cycle of each phase of stator winding includes: a stator winding energy storage stage in which the current increases gradually, a stator winding freewheeling stage in which the current remains constant, a stator winding discharge stage in which the current decreases gradually, and a stator winding current interruption stage in which the current is zero. In this way, the current direction of each phase of stator winding keeps unchanged when the motor heats the battery in this embodiment of this application, thereby increasing the current harmonics of the stator winding of the motor, and in turn, dispersing the vibration noise energy generated when the motor heats the battery. In addition, by controlling the interruption duration in which the motor is in the stator winding current interruption stage, this embodiment of this application can reduce the effective value of the current of the stator winding while keeping the effective value of a current waveform of the battery unchanged, thereby further reducing the motor noise.

In some embodiments, in the stator winding current interruption stage in which the current is zero, the battery is charged by a capacitor in the heating circuit. The capacitor is connected in series between two terminals of the battery. The technical solution according to this embodiment of this application not only ensures high efficiency of battery heating, but also improves the energy utilization rate during the battery heating.

In some embodiments, a current in each phase of stator winding is a half-wave current. In this way, the current direction of the current in each phase of stator winding keeps unchanged in each half cycle. The technical solution according to this embodiment of this application not only increases the current harmonics of the stator winding of the motor, and in turn, disperses the vibration noise energy generated when the motor heats the battery, but also increases the heating duration and heating power, and in turn, increases the efficiency of battery heating.

In some embodiments, when the motor is in a stator winding discharge stage, a lower bridge arm switching transistor in a first inverter bridge arm in the switching circuit is switched to an off-state to form a charge path through which the motor charges the battery, so as to transmit electrical energy stored in the motor to the battery, and facilitate heating of the battery. The first inverter bridge arm is a bridge arm in which the lower bridge arm switching transistor in the switching circuit is in the on-state when the motor is in a stator winding energy storage stage.

In some embodiments, when the motor is in the stator winding energy storage stage, an upper bridge arm switching transistor in a second inverter bridge arm in the switching circuit is in an on-state, and the lower bridge arm switching transistor in the first inverter bridge arm other than the second inverter bridge arm in the switching circuit is in the on-state, so as to form a discharge path through which the battery discharges electricity to the motor, and in turn, transmit electrical energy stored in the battery to the motor to heat the battery.

In some embodiments, when the motor is in a stator winding freewheeling stage, the upper bridge arm switching transistor in the second inverter bridge arm is switched to the off-state, and the lower bridge arm switching transistor in the first inverter bridge arm keeps in the on-state, so as to cut off the discharge path through which the battery discharges electricity to the motor.

In some embodiments, when the motor is in a stator winding current interruption stage, the lower bridge arm switching transistor in the first inverter bridge arm keeps in the off-state, so as to form an energy oscillation path between the capacitor in the heating circuit and the battery, so that the capacitor in the heating circuit exchanges energy with the battery through oscillation, thereby improving the energy utilization rate during heating of the battery.

To sum up, when the motor is in different stages, the on-off states of the switching transistors in the three inverter bridge arms in the switching circuit are different, so as to keep the current direction unchanged in each phase of stator winding when the motor heats the battery, and in turn, increase the current harmonics of the stator winding of the motor, disperse the vibration noise energy generated when the motor heats the battery, and therefore, alleviate the vibration noise generated when the motor heats the battery.

In some embodiments, the controlling an on-off state of a switching transistor in the switching circuit in response to the heating enable signal includes: controlling the upper bridge arm switching transistor in the second inverter bridge arm in the switching circuit to be in the on-state, and controlling the lower bridge arm switching transistor in the first inverter bridge arm other than the second inverter bridge arm in the switching circuit to be in the on-state, so as to form the discharge path through which the battery discharges electricity to the motor, and leave the motor to be in the stator winding energy storage stage.

In some embodiments, the controlling an on-off state of a switching transistor in the switching circuit in response to the heating enable signal includes: controlling, when it is detected that a running state of the motor meets a preset freewheeling condition, the upper bridge arm switching transistor turned on in the second inverter bridge arm to switch to the off-state, so as to cut off the discharge path through which the battery discharges electricity to the motor, and leave the motor to be in the stator winding freewheeling stage.

In some embodiments, the controlling an on-off state of a switching transistor in the switching circuit in response to the heating enable signal includes: controlling, when it is detected that a duration of a freewheeling stage exceeds a preset freewheeling duration, the lower bridge arm switching transistor turned on in the first inverter bridge arm to switch to the off-state, so as to form a charge path through which the motor charges the battery, and leave the motor to be in the stator winding discharge stage.

In some embodiments, the controlling an on-off state of a switching transistor in the switching circuit in response to the heating enable signal includes: controlling, after it is detected that energy stored in the stator winding of the motor is fully released, the lower bridge arm switching transistor in the first inverter bridge arm to keep in the off-state, so as to form the energy oscillation path between the capacitor in the heating circuit and the battery, and leave the motor to be in the stator winding current interruption stage.

To sum up, by controlling the on-off state of the upper bridge arm switching transistor in the second inverter bridge arm and the lower bridge arm switching transistor in the first inverter bridge arm among the three inverter bridge arms in the switching circuit, the motor can heat the battery while keeping the current direction unchanged in each phase of stator winding, thereby increasing the current harmonics of the stator winding of the motor, and in turn, dispersing the vibration noise energy generated when the motor heats the battery. In addition, the controller can also control the interruption duration in which the motor is in the stator winding current interruption state, and reduce the effective value of the current of the stator winding while keeping the effective value of the current waveform of the battery unchanged, thereby further reducing the motor noise. Therefore, compared with the conventional technology, this embodiment of this application can effectively alleviate the motor noise without compromising the effect of battery heating.

In some embodiments, before the controlling the upper bridge arm switching transistor in the second inverter bridge arm in the switching circuit to be in the on-state, and controlling the lower bridge arm switching transistor in the first inverter bridge arm other than the second inverter bridge arm in the switching circuit to be in the on-state, the method further includes: determining the second inverter bridge arm based on a rotor position of the motor.

In some embodiments, the determining the second inverter bridge arm based on a rotor position of the motor includes:
obtaining spatial vector data, where the switching state spatial vector data includes a plurality of spatial sectors, and each spatial sector corresponds to different switching state information;
determining a first spatial sector in which a rotor of the motor is located, and a second spatial sector symmetrical to the first spatial sector; and
determining the second inverter bridge arm based on the switching state information corresponding to the first spatial sector and the second spatial sector.

In the technical solution according to this embodiment of this application, the second inverter bridge arm with an upper bridge arm switching transistor needing to be turned on among the three inverter bridge arms in an appropriate switching circuit can be determined based on the rotor position of the motor. In this way, an angle between a stator magnetic field generated by inductive excitation and a rotor magnetic field is relatively small, thereby reducing the torque fluctuation generated at the beginning of heating.

In some embodiments, when the motor is in a stator winding discharge stage, a lower bridge arm switching transistor in a neutral bridge arm in the switching circuit is switched to an off-state; or, an upper bridge arm switching transistor in a neutral bridge arm in the switching circuit is switched to an off-state, so as to form a charge path through which the motor charges the battery, and in turn, transmit electrical energy stored in the motor to the battery to heat the battery.

In some embodiments, when the motor is in a stator winding energy storage stage, the upper bridge arm switching transistor in each inverter bridge arm in the switching circuit is in an on-state, and the lower bridge arm switching transistor in the neutral bridge arm is in the on-state, or, the lower bridge arm switching transistor in each inverter bridge arm is in an on-state, and the upper bridge arm switching transistor in the neutral bridge arm is in the on-state, so as to form a discharge path through which the battery discharges electricity to the motor, and in turn, transmit electrical energy stored in the battery to the motor to heat the battery.

In some embodiments, when the motor is in a stator winding freewheeling stage, the upper bridge arm switching transistor in each inverter bridge arm is switched to the off-state, and the lower bridge arm switching transistor in the neutral bridge arm keeps in the on-state, or, the lower bridge arm switching transistor in each inverter bridge arm is switched to the off-state, and the upper bridge arm switching transistor in the neutral bridge arm keeps in the on-state, so as to cut off the discharge path through which the battery discharges electricity to the motor.

In some embodiments, when the motor is in a stator winding current interruption stage, the lower bridge arm switching transistor in the neutral bridge arm keeps in the off-state, or the upper bridge arm switching transistor in the neutral bridge arm keeps in the off-state, so as to form an energy oscillation path between the capacitor and the battery, so that the capacitor in the heating circuit exchanges energy with the battery through oscillation to improve the energy utilization rate during heating of the battery.

To sum up, when the motor is in different stages, the on-off states of the switching transistors in the three inverter bridge arms and the neutral bridge arm are different, so as to keep the current direction unchanged in each phase of stator winding when the motor heats the battery, and in turn, increase the current harmonics of the stator winding of the motor, disperse the vibration noise energy generated when the motor heats the battery, and therefore, alleviate the vibration noise generated when the motor heats the battery.

In some embodiments, the controlling an on-off state of a switching transistor in the switching circuit in response to the heating enable signal includes:
controlling the upper bridge arm switching transistor in each inverter bridge arm to be in the on-state, and controlling the lower bridge arm switching transistor in the neutral bridge arm to be in the on-state, so as to form the discharge path through which the battery discharges electricity to the motor, and leave the motor to be in the stator winding energy storage stage; or
controlling the lower bridge arm switching transistor in each inverter bridge arm to be in the on-state, and controlling the upper bridge arm switching transistor in the neutral bridge arm to be in the on-state, so as to form the discharge path through which the battery discharges electricity to the motor, and leave the motor to be in the stator winding energy storage stage.

In some embodiments, the controlling an on-off state of a switching transistor in the switching circuit in response to the heating enable signal includes:
controlling, when it is detected that a running state of the motor meets a preset freewheeling condition, the upper bridge arm switching transistor in each inverter bridge arm to switch to the off-state, so as to cut off the discharge path through which the battery discharges electricity to the motor, and leave the motor to be in the stator winding freewheeling stage; or
controlling, when it is detected that a running state of the motor meets a preset freewheeling condition, the lower bridge arm switching transistor in each inverter bridge arm to switch to the off-state, so as to cut off the discharge path through which the battery discharges electricity to the motor, and leave the motor to be in the stator winding freewheeling stage.

In some embodiments, the controlling an on-off state of a switching transistor in the switching circuit in response to the heating enable signal includes:
controlling, when it is detected that a duration of a freewheeling stage exceeds a preset freewheeling duration, the lower bridge arm switching transistor in the neutral bridge arm to switch to the off-state, so as to form a charge path through which the motor charges the battery, and leave the motor to be in the stator winding discharge stage; or
controlling, when it is detected that a duration of a freewheeling stage exceeds a preset freewheeling duration, the upper bridge arm switching transistor in the neutral bridge arm to switch to the off-state, so as to form a charge path through which the motor charges the battery, and leave the motor to be in the stator winding discharge stage.

In some embodiments, the controlling an on-off state of a switching transistor in the switching circuit in response to the heating enable signal includes:
controlling, after it is detected that energy stored in the stator winding of the motor is fully released, the lower bridge arm switching transistor in the neutral bridge arm to keep in the off-state, so as to form the energy oscillation path between the capacitor and the battery, and leave the motor to be in the stator winding current interruption stage; or
controlling, after it is detected that energy stored in the stator winding of the motor is fully released, the upper bridge arm switching transistor in the neutral bridge arm to keep in the off-state, so as to form the energy oscillation path between the capacitor and the battery, and leave the motor to be in the stator winding current interruption stage.

In some embodiments, the obtaining a heating enable signal includes:
generating the heating enable signal when it is detected that a battery heating condition is met and the motor is in a non-operating state; or
receiving the heating enable signal sent by a vehicle controller, where the heating enable signal is sent by the vehicle controller when the vehicle controller receives a heating request sent by a battery management system BMS and detects that the motor is in a non-operating state.

In some embodiments, the method further includes: controlling, when it is detected that a temperature of the battery is abnormal or a temperature of the battery reaches a preset temperature, the switching transistor in the switching circuit to be in an off-state.

In some embodiments, the method further includes: controlling, when a battery temperature abnormality signal or a heating stop enable signal sent by a vehicle controller is received, the switching transistor in the switching circuit to be in an off-state.

According to a second aspect, this application provides a battery heating circuit. The battery heating circuit includes a heating circuit and a controller. The heating circuit includes a motor and a switching circuit connected separately to the motor and a battery.

The controller is configured to control, after obtaining a heating enable signal, an on-off state of a switching transistor in the switching circuit in response to the heating enable signal so that the motor heats the battery while keeping a current direction unchanged in each phase of stator winding of the motor. The heating enable signal is used for instructing the motor to heat the battery based on the heating circuit.

In some embodiments, a current in each phase of stator winding changes cyclically. A current cycle of each phase of stator winding includes: a stator winding energy storage stage in which the current increases gradually, a stator winding freewheeling stage in which the current remains constant, a stator winding discharge stage in which the current decreases gradually, and a stator winding current interruption stage in which the current is zero.

In some embodiments, in the stator winding current interruption stage in which the current is zero, the battery is charged by a capacitor in the heating circuit. The capacitor is connected in series between two terminals of the battery.

In some embodiments, a current in each phase of stator winding is a half-wave current.

In some embodiments, the switching circuit includes three inverter bridge arms and a capacitor connected in parallel to the three inverter bridge arms. The three inverter bridge arms are disposed between a three-phase stator winding of the motor and the battery. A first end of each inverter bridge arm is connected to a positive electrode of the battery. A second end of each inverter bridge arm is connected to a negative electrode of the battery. Third ends of the three inverter bridge arms are connected to corresponding phases of the three-phase stator winding of the motor respectively. Each inverter bridge arm includes an upper bridge arm switching transistor and a lower bridge arm switching transistor.

When the motor is in a stator winding discharge stage, the lower bridge arm switching transistor in a first inverter bridge arm in the switching circuit is switched to an off-state to form a charge path through which the motor charges the battery, so as to transmit electrical energy stored in the motor to the battery. The first inverter bridge arm is a bridge arm in which the lower bridge arm switching transistor in the switching circuit is in an on-state when the motor is in a stator winding energy storage stage.

In some embodiments, when the motor is in the stator winding energy storage stage, the upper bridge arm switching transistor in a second inverter bridge arm in the switching circuit is in an on-state, and the lower bridge arm switching transistor in the first inverter bridge arm other than the second inverter bridge arm in the switching circuit is in the on-state, so as to form a discharge path through which the battery discharges electricity to the motor, and in turn, transmit electrical energy stored in the battery to the motor.

In some embodiments, when the motor is in a stator winding freewheeling stage, the upper bridge arm switching transistor in the second inverter bridge arm is switched to the off-state, and the lower bridge arm switching transistor in the first inverter bridge arm keeps in the on-state, so as to cut off the discharge path through which the battery discharges electricity to the motor.

In some embodiments, when the motor is in a stator winding current interruption stage, the lower bridge arm switching transistor in the first inverter bridge arm keeps in the off-state, so as to form an energy oscillation path between the capacitor in the heating circuit and the battery.

In some embodiments, the controller is specifically configured to: control the upper bridge arm switching transistor in the second inverter bridge arm in the switching circuit to be in the on-state, and control the lower bridge arm switching transistor in the first inverter bridge arm other than the second inverter bridge arm in the switching circuit to be in the on-state, so as to form the discharge path through which the battery discharges electricity to the motor, and leave the motor to be in the stator winding energy storage stage.

In some embodiments, the controller is specifically configured to: control, when it is detected that a running state of the motor meets a preset freewheeling condition, the upper bridge arm switching transistor turned on in the second inverter bridge arm to switch to the off-state, so as to cut off the discharge path through which the battery discharges electricity to the motor, and leave the motor to be in the stator winding freewheeling stage.

In some embodiments, the controller is specifically configured to: control, when it is detected that a duration of a freewheeling stage exceeds a preset freewheeling duration, the lower bridge arm switching transistor turned on in the first inverter bridge arm to switch to the off-state, so as to form a charge path through which the motor charges the battery, and leave the motor to be in the stator winding discharge stage to heat the battery.

In some embodiments, the controller is specifically configured to: control, after it is detected that energy stored in the stator winding of the motor is fully released, the lower bridge arm switching transistor in the first inverter bridge arm to keep in the off-state, so as to form the energy oscillation path between the capacitor in the heating circuit and the battery, and leave the motor to be in the stator winding current interruption stage.

In some embodiments, the controller is further configured to: determine the second inverter bridge arm based on a rotor position of the motor.

In some embodiments, the controller is specifically configured to:
obtain spatial vector data, where the switching state spatial vector data includes a plurality of spatial sectors, and each spatial sector corresponds to different switching state information;
determine a first spatial sector in which a rotor of the motor is located, and a second spatial sector symmetrical to the first spatial sector; and
determine the second inverter bridge arm based on the switching state information corresponding to the first spatial sector and the second spatial sector.

In some embodiments, the switching circuit includes: a neutral bridge arm disposed between a neutral wire of the motor and the battery, three inverter bridge arms disposed between a three-phase stator winding of the motor and the battery, and a capacitor connected in parallel to the three inverter bridge arms. A first end of each inverter bridge arm and a first end of the neutral bridge arm each are connected to a positive electrode of the battery. A second end of each inverter bridge arm and a second end of the neutral bridge arm each are connected to a negative electrode of the battery. Third ends of the three inverter bridge arms are connected to corresponding phases of the three-phase stator winding of the motor respectively. A third end of the neutral bridge arm is connected to the neutral wire of the motor. Each inverter bridge arm includes an upper bridge arm switching transistor and a lower bridge arm switching transistor. The neutral bridge arm includes an upper bridge arm switching transistor and a lower bridge arm switching transistor.

When the motor is in a stator winding discharge stage, a lower bridge arm switching transistor in a neutral bridge arm in the switching circuit is switched to an off-state; or, an upper bridge arm switching transistor in a neutral bridge arm in the switching circuit is switched to an off-state, so as to form a charge path through which the motor charges the battery, and in turn, transmit electrical energy stored in the motor to the battery.

In some embodiments, when the motor is in a stator winding energy storage stage, the upper bridge arm switching transistor in each inverter bridge arm in the switching circuit is in an on-state, and the lower bridge arm switching transistor in the neutral bridge arm is in the on-state; or, the lower bridge arm switching transistor in each inverter bridge arm in the switching circuit is in an on-state, and the upper bridge arm switching transistor in the neutral bridge arm is in the on-state, so as to form a discharge path through which the battery discharges electricity to the motor, and in turn, transmit electrical energy stored in the battery to the motor.

In some embodiments, when the motor is in a stator winding freewheeling stage, the upper bridge arm switching transistor in each inverter bridge arm is switched to the off-state, and the lower bridge arm switching transistor in the neutral bridge arm keeps in the on-state; or, the lower bridge arm switching transistor in each inverter bridge arm is switched to the off-state, and the upper bridge arm switching transistor in the neutral bridge arm keeps in the on-state, so as to cut off the discharge path through which the battery discharges electricity to the motor.

In some embodiments, when the motor is in a stator winding current interruption stage, the lower bridge arm switching transistor in the neutral bridge arm keeps in the off-state, or the upper bridge arm switching transistor in the neutral bridge arm keeps in the off-state, so as to form an energy oscillation path between the capacitor and the battery.

In some embodiments, the controller is specifically configured to:
control the upper bridge arm switching transistor in each inverter bridge arm to be in the on-state, and control the lower bridge arm switching transistor in the neutral bridge arm to be in the on-state, so as to form the discharge path through which the battery discharges electricity to the motor, and leave the motor to be in the stator winding energy storage stage; or
control the lower bridge arm switching transistor in each inverter bridge arm to be in the on-state, and control the upper bridge arm switching transistor in the neutral bridge arm to be in the on-state, so as to form the discharge path through which the battery discharges electricity to the motor, and leave the motor to be in the stator winding energy storage stage.

In some embodiments, the controller is specifically configured to:
control, when it is detected that a running state of the motor meets a preset freewheeling condition, the upper bridge arm switching transistor in each inverter bridge arm to switch to the off-state, so as to cut off the discharge path through which the battery discharges electricity to the motor, and leave the motor to be in the stator winding freewheeling stage; or
control, when it is detected that a running state of the motor meets a preset freewheeling condition, the lower bridge arm switching transistor in each inverter bridge arm to switch to the off-state, so as to cut off the discharge path through which the battery discharges electricity to the motor, and leave the motor to be in the stator winding freewheeling stage.

In some embodiments, the controller is specifically configured to:
control, when it is detected that a duration of a freewheeling stage exceeds a preset freewheeling duration, the lower bridge arm switching transistor in the neutral bridge arm to switch to the off-state, so as to form a charge path through which the motor charges the battery, and leave the motor to be in the stator winding discharge stage; or
control, when it is detected that a duration of a freewheeling stage exceeds a preset freewheeling duration, the upper bridge arm switching transistor in the neutral bridge arm to switch to the off-state, so as to form a charge path through which the motor charges the battery, and leave the motor to be in the stator winding discharge stage.

In some embodiments, the controller is specifically configured to:
control, after it is detected that energy stored in the stator winding of the motor is fully released, the lower bridge arm switching transistor in the neutral bridge arm to keep in the off-state, so as to form the energy oscillation path between the capacitor and the battery, and leave the motor to be in the stator winding current interruption stage; or
control, after it is detected that energy stored in the stator winding of the motor is fully released, the upper bridge arm switching transistor in the neutral bridge arm to keep in the off-state, so as to form the energy oscillation path between the capacitor and the battery, and leave the motor to be in the stator winding current interruption stage.

In some embodiments, the switching transistor in the switching circuit includes an insulated gate bipolar transistor IGBT or a silicon carbide transistor.

In some embodiments, the controller is specifically configured to:
generate the heating enable signal when it is detected that a battery heating condition is met and the motor is in a non-operating state; or
receive the heating enable signal sent by a vehicle controller, where the heating enable signal is sent by the vehicle controller when the vehicle controller receives a heating request sent by a battery management system BMS and detects that the motor is in a non-operating state.

In some embodiments, the controller is further configured to:
control, when it is detected that a temperature of the battery is abnormal or a temperature of the battery reaches a preset temperature, the switching transistor in the switching circuit to be in an off-state; or
control, when a battery temperature abnormality signal or a heating stop enable signal sent by a vehicle controller is received, the switching transistor in the switching circuit to be in an off-state.

According to a third aspect, this application provides an electrical device. The electrical device includes the battery heating circuit according to any embodiment in the second aspect.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1A is a schematic diagram of an application environment according to an embodiment of this application;
FIG. 1B is a second schematic diagram of an application environment according to an embodiment of this application;
FIG. 2 is a schematic flowchart of a battery heating method according to some embodiments of this application;
FIG. 3 is a schematic diagram of a current waveform of a stator winding according to some other embodiments of this application;
FIG. 4 is a schematic structural diagram of a battery heating circuit according to some embodiments of this application;
FIG. 5 is a schematic diagram of a spatial vector diagram according to an embodiment of this application;
FIG. 6 is a first schematic diagram of a current direction when a motor is in a stator winding energy storage stage according to an embodiment of this application;
FIG. 7 is a first schematic diagram of a current direction when a motor is in a stator winding freewheeling stage according to an embodiment of this application;
FIG. 8 is a first schematic diagram of a current direction when a motor is in a stator winding discharge stage according to an embodiment of this application;
FIG. 9 is a schematic flowchart of a battery heating method according to some other embodiments of this application;
FIG. 10 is a schematic structural diagram of a battery heating circuit according to some other embodiments of this application;
FIG. 11 is a second schematic diagram of a current direction when a motor is in a stator winding energy storage stage according to an embodiment of this application;
FIG. 12 is a second schematic diagram of a current direction when a motor is in a stator winding freewheeling stage according to an embodiment of this application;
FIG. 13 is a second schematic diagram of a current direction when a motor is in a stator winding discharge stage according to an embodiment of this application;
FIG. 14 is a schematic flowchart of a battery heating method according to some other embodiments of this application,
FIG. 15 is a schematic flowchart of a battery heating method according to some other embodiments of this application, and
FIG. 16 is a schematic structural diagram of a battery heating circuit according to some other embodiments of this application.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The term "include" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more (including two).

A conventional technique for alleviating the problem of large vibration noise generated during motor pulse heating is to add neutral points of the motor. However, in the conventional technology, a relatively high level of vibration noise still persists when the battery is heated by using a motor in which the neutral points are added.

In order to reduce the vibration noise generated when the motor heats the battery, the applicant hereof finds that the vibration noise energy generated when the motor heats the battery can be dispersed by increasing the current harmonics of the stator winding of the motor, thereby reducing the sound pressure level of the vibration noise.

In view of the above factors, in order to solve the problem of vibration noise when the motor heats the battery in the conventional technology, the applicant hereof discloses a battery heating method after research. In this method, the on-off state of the switching transistor in the switching circuit connected to the motor is controlled, so that the motor heats the battery while keeping the current direction unchanged in each phase of stator winding of the motor, thereby increasing current harmonics of the stator winding of the motor, and in turn, dispersing the vibration noise energy generated when the motor heats the battery. As can be seen, in contrast to the conventional technology, the vibration noise is relatively low when the motor heats the battery according to an embodiment of this application.

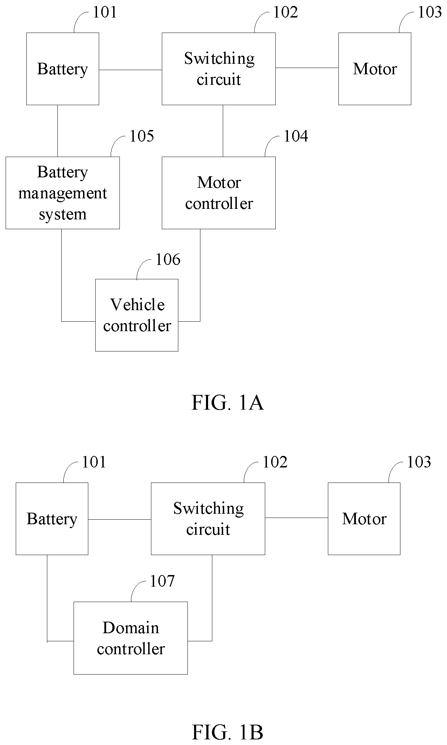

FIG. 1A is a first schematic diagram of an application environment according to an embodiment of this application. As shown in FIG. 1A, the application environment according to this embodiment of this application may include, but is not limited to, a battery 101, a switching circuit 102, a motor 103, a motor controller 104, a battery management system (Battery Management System, BMS) 105, and a vehicle controller 106. As an example, the motor controller 104 may include, but is not limited to, a motor control unit (Motor Control Unit, MCU).

As an example, when detecting a need to heat the battery 101, the BMS 105 sends a heating request to the vehicle controller 106. Therefore, the vehicle controller 106 instructs the motor controller 104 to control the motor 103 to heat the battery 101. The motor controller 104 is configured to control an on-off state of a switching transistor in a switching circuit 102 based on a battery heating method disclosed in an embodiment of this application, so as to control the motor 103 to heat the battery 101.

FIG. 1B is a second schematic diagram of an application environment according to an embodiment of this application. As shown in FIG. 1B, the application environment according to this embodiment of this application may include, but is not limited to, a battery 101, a switching circuit 102, a motor 103, a domain controller 107. The domain controller 107 may integrate the functions of a motor controller, a BMS, and a vehicle controller.

As an example, when detecting a need to heat the battery 101, the domain controller 107 controls the motor 103 to heat the battery 101. The domain controller 107 is configured to control an on-off state of a switching transistor in a switching circuit 102 based on a battery heating method disclosed in an embodiment of this application, so as to control the motor 103 to heat the battery 101.

Any switching transistor referred to herein may include an insulated gate bipolar transistor (Insulated Gate Bipolar Transistor, IGBT) or a silicon carbide transistor, and definitely, may include other controllable switching transistors, without being limited herein. It is hereby noted that any switching transistor referred to herein is a switching transistor containing a body diode.

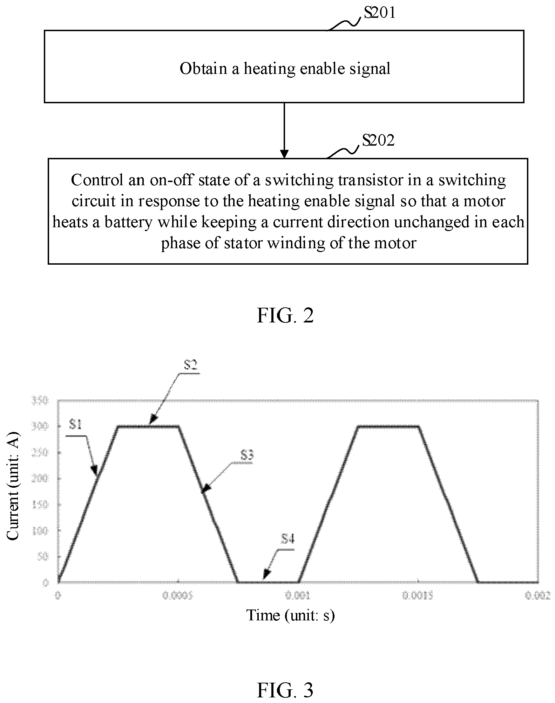

In some embodiments, FIG. 2 is a schematic flowchart of a battery heating method according to some embodiments of this application. As an example for the description in some embodiments of this application, the method is applied to a controller. The controller may be a motor controller 104 in FIG. 1A or a domain controller 107 in FIG. 1B. As shown in FIG. 2, the method according to an embodiment of this application may include the following steps:
Step S201: Obtain a heating enable signal.

The heating circuit referred to herein may include, but is not limited to, a motor and a switching circuit connected separately to the motor and a battery. The switching circuit is configured to adjust a current path between the battery and the motor under the control of a controller, so as to heat the battery while keeping the current direction unchanged in each phase of stator winding of the motor.

Optionally, the switching circuit may include a plurality of bridge arms disposed between the motor and the battery. Each bridge arm may include an upper bridge arm switching transistor and a lower bridge arm switching transistor. The on-off states of the switching transistors in each bridge arm in the switching circuit are different, so as to adjust the current path between the battery and the motor.

In a possible embodiment, if the motor includes a three-phase stator winding (without a neutral wire), the switching circuit may include three inverter bridge arms and a capacitor connected in parallel to the three inverter bridge arms. The three inverter bridge arms are disposed between the three-phase stator winding of the motor and the battery. A first end of each inverter bridge arm is connected to a positive electrode of the battery. A second end of each inverter bridge arm is connected to a negative electrode of the battery. Third ends of the three inverter bridge arms are connected to the phases of the three-phase stator winding of the motor respectively in one-to-one correspondence. The capacitor is connected in series between two terminals of the battery. The capacitor serves the functions of voltage stabilization, filtering, and/or energy storage. Definitely, other devices may also be included in the switching circuit, without being limited herein. Understandably, each inverter bridge arm in this embodiment of this application includes a plurality of switching transistors.

In another possible embodiment, if the motor includes a three-phase stator winding and a neutral wire, the switching circuit may include a neutral bridge arm disposed between the neutral wire of the motor and the battery, three inverter bridge arms disposed between the three-phase stator winding of the motor and the battery, and a capacitor connected in parallel to the three inverter bridge arms. A first end of each inverter bridge arm and a first end of the neutral bridge arm are both connected to a positive electrode of the battery. A second end of each inverter bridge arm and a second end of the neutral bridge arm are both connected to a negative electrode of the battery. Third ends of the three inverter bridge arms are connected to the phases of the three-phase stator winding of the motor respectively in one-to-one correspondence. A third end of the neutral bridge arm is connected to the neutral wire of the motor. The capacitor is connected in series between two terminals of the battery. The capacitor serves the functions of voltage stabilization, filtering, and/or energy storage. Definitely, the switching circuit may include other components not limited herein. Understandably, each inverter bridge arm and each neutral bridge arm in this embodiment of this application each may include a plurality of switching transistors.

In this step, the controller may obtain a heating enable signal. The heating enable signal is used for instructing the motor to heat the battery based on the heating circuit.

In a possible implementation, if the controller is a motor controller, the controller may receive the heating enable signal sent by a vehicle controller. The heating enable signal is sent by the vehicle controller when the vehicle controller receives a heating request sent by a battery management system BMS and detects that the motor is in a non-operating state.

As an example, the BMS may collect the state parameters of the battery in real time. The state parameters may include, but are not limited to, temperature, state of charge (State of Charge, SoC), voltage, and current. Further, the BMS determines, based on the temperature and/or SoC of the battery, whether a battery heating condition 1 is met. If the battery heating condition 1 is met, the BMS may send a heating request to the vehicle controller. The battery heating condition 1 may include, but is not limited to, the battery temperature is lower than a preset temperature lower limit, and/or the SoC is in a preset SoC range. Further, after receiving the heating request sent by the BMS, the vehicle controller may detect the state of the motor. If it is detected that the motor is in a non-operating state, the vehicle controller may send a heating enable signal to the controller. Understandably, the heating enable signal referred to herein may be sent by the vehicle controller through various communication protocols or signaling, and the sending manner is not limited herein.

Definitely, the heating enable signal may be sent by the vehicle controller to the controller in other circumstances. For example, the heating enable signal may be sent to the controller by the vehicle controller upon detecting that the preset time is reached or the ambient temperature is lower than a preset ambient temperature and that the motor is in a non-operating state.

It is hereby noted that if it is detected that the motor is in an operating state (or, also referred to as a driving state), the vehicle controller may send a control drive signal to the controller, so that the controller sends a drive signal periodically to control the on-off state of the switching transistors in each inverter bridge arm, thereby controlling the inversion of the current of the battery.

In another possible implementation, if the controller is a domain controller, the controller may generate a heating enable signal when it is detected that a battery heating condition 2 is met and the motor is in a non-operating state. The battery heating condition 2 may include, but is not limited to, the temperature of the battery is lower than a preset temperature lower limit, the SoC falls within a preset SoC range, a preset time is reached, and/or the ambient temperature is lower than a preset ambient temperature.

Definitely, the controller may obtain the heating enable signal in other ways, without being limited herein.

Step S202: Control an on-off state of a switching transistor in the switching circuit in response to the heating enable signal so that the motor heats the battery while keeping a current direction unchanged in each phase of stator winding of the motor.

In this step, the controller may control the on-off state of the switching transistor in the switching circuit in response to the heating enable signal obtained in the above step S201, and adjust the current path between the battery and the motor. In this way, the motor heats the battery while keeping the current direction unchanged in each phase of stator winding of the motor, thereby increasing current harmonics of the stator winding of the motor, and in turn, dispersing vibration noise energy generated when the motor heats the battery.

As an example, the current in each phase of stator winding in this embodiment of this application may be a half-wave current. In this way, the current direction of the current in each phase of stator winding keeps unchanged within each half cycle, thereby not only increasing the current harmonics of the stator winding of the motor, and in turn, dispersing the vibration noise energy generated when the motor heats the battery, but also increasing the heating duration and heating power, and therefore, improving the efficiency of battery heating.

As another example, the current in each phase of stator winding in an embodiment of this application may a quarter-wavelength current. In this way, the current direction of the current in each phase of stator winding keeps unchanged in each quarter cycle. Definitely, the current in each phase of stator winding in an embodiment of this application may be another form of current.

In a possible implementation, if the motor includes a three-phase stator winding (without a neutral wire), the controller may control the on-off state of the switching transistors in the three inverter bridge arms in the switching circuit in response to the heating enable signal so that the motor heats the battery while keeping the current direction unchanged in each phase of stator winding of the motor.

In another possible implementation, if the motor includes a three-phase stator winding and a neutral wire, the controller may control the on-off state of the switching transistors in the three inverter bridge arms and the neutral bridge arm in the switching circuit in response to the heating enable signal so that the motor heats the battery while keeping the current direction unchanged in each phase of stator winding of the motor.

In the above battery heating method, the heating enable signal used for instructing the motor to heat the battery based on the heating circuit is obtained, and the on-off state of the switching transistor in the switching circuit is controlled in response to the heating enable signal. In this way, the motor heats the battery while keeping the current direction unchanged in each phase of stator winding of the motor, thereby increasing current harmonics of the stator winding of the motor, and in turn, dispersing vibration noise energy generated when the motor heats the battery. As can be seen, compared with the conventional technology, the vibration noise is relatively low when the motor in an embodiment of this application heats the battery, thereby alleviating the vibration noise generated when the motor heats the battery.

In some embodiments, on the basis of the above embodiments, the current in each phase of stator winding is described below.

In some embodiments, the current in each phase of stator winding may change cyclically. A current cycle of each phase of stator winding may include, but is not limited to: a stator winding energy storage stage in which the current increases gradually, a stator winding freewheeling stage in which the current remains constant, a stator winding discharge stage in which the current decreases gradually, and a stator winding current interruption stage in which the current is zero.

For ease of understanding, in an embodiment of this application, the current waveform of each phase of stator winding is described exemplarily by using an example in which the current in each phase of stator winding is a half-wave current. FIG. 3 is a schematic diagram of a current waveform of an arbitrary phase of stator winding according to some other embodiments of this application. As shown in FIG. 3, the current in an arbitrary phase of stator winding in these embodiments changes cyclically. A current cycle of this phase of stator winding may include: a stator winding energy storage stage S1 in which the current increases gradually, a stator winding freewheeling stage S2 in which the current remains constant, a stator winding discharge stage S3 in which the current decreases gradually, and a stator winding current interruption stage S4 in which the current is zero.

As an example, when the current in the stator winding is in the stator winding energy storage stage S1 in which the current increases gradually, the battery is in a discharging state, and the stator winding of the motor is in an excitation energy storage state (or, in other words, the motor is in a stator winding energy storage stage). When the current in the stator winding is in a stator winding freewheeling stage S2 in which the current remains unchanged, the stator winding of the motor is in an internal freewheeling state (or, in other words, the motor is in a stator winding freewheeling stage). When the current in the stator winding is in a stator winding discharge stage S3 in which the current decreases gradually, the stator winding of the motor is in an energy discharge state (or, in other words, the motor is in a stator winding discharge stage), and the battery is in a charging state. When the current in the stator winding is in a stator winding current interruption stage S4 in which the current is zero, the stator winding of the motor is in an interruption state (or, in other words, the motor is in a stator winding current interruption stage).

Understandably, the capacitor in the heating circuit has stored some energy in the three stages before the stator winding current interruption stage. Therefore, when the current in the stator winding is in the stator winding current interruption stage in which the current is zero, the capacitor in the heating circuit can charge the battery, thereby not only ensuring high efficiency of battery heating, but also improving the energy utilization rate during the battery heating.

As can be seen, in this embodiment of this application, the current in each phase of stator winding changes cyclically, and the current cycle of each phase of stator winding includes: a stator winding energy storage stage in which the current increases gradually, a stator winding freewheeling stage in which the current remains constant, a stator winding discharge stage in which the current decreases gradually, and a stator winding current interruption stage in which the current is zero. In this way, the current direction of each phase of stator winding keeps unchanged when the motor heats the battery in this embodiment of this application, thereby increasing the current harmonics of the stator winding of the motor, and in turn, dispersing the vibration noise energy generated when the motor heats the battery.

In addition, in this embodiment of this application, the controller can control an interruption duration in which the motor is in the stator winding current interruption stage (or an interruption duration of the stator winding current interruption stage S4 in which the current of the stator winding is zero), thereby reducing the effective value of the current of the stator winding while keeping the effective value of the current of the battery unchanged, and in turn, further reducing the motor noise.

In some embodiments, on the basis of the above embodiment, the controller can control the switching transistor in the switching circuit to be in the off-state when it is detected that a heating stop condition is met, so that the motor stops heating the battery, thereby protecting the safety of the battery.

In a possible implementation, if the controller is a motor controller, the controller can control, when a battery temperature abnormality signal or a heating stop enable signal sent by a vehicle controller is received, the switching transistor in the switching circuit to be in the off-state, so that the motor stops heating the battery, thereby protecting the safety of the battery.

As an example, the BMS may determine, in real time or at preset intervals, whether the battery temperature is abnormal. If it is determined that the battery temperature is abnormal, the BMS may send a battery temperature abnormality signal to the vehicle controller. Accordingly, the vehicle controller forwards the battery temperature abnormality signal to the controller, so that the controller controls the switching transistor in the switching circuit to be in the off-state, so as to stop heating the battery.

As another example, the BMS may, in real time or at preset intervals, determine whether the battery temperature reaches a preset temperature. If it is determined that the battery temperature reaches the preset temperature, the BMS may send a heating stop enable signal to the vehicle controller. Accordingly, the vehicle controller forwards the heating stop enable signal to the controller, so that the controller controls the switching transistor in the switching circuit to be in the off-state, thereby stopping heating the battery.

In another possible implementation, if the controller is a domain controller, the controller can control, when it is detected that the battery temperature is abnormal or the battery temperature reaches a preset temperature, the switching transistor in the switching circuit to be in the off-state, so that the motor stops heating the battery, thereby protecting the safety of the battery.

Understandably, the controller keeps performing step S202 if the controller does not detect satisfaction of the heating stop condition in step S202.

On the basis of the above embodiment, the following embodiments of this application deal with a scenario in which the motor includes a three-phase stator winding (but includes no neutral wire), and a scenario in which the motor includes a three-phase stator winding and a neutral wire, separately.

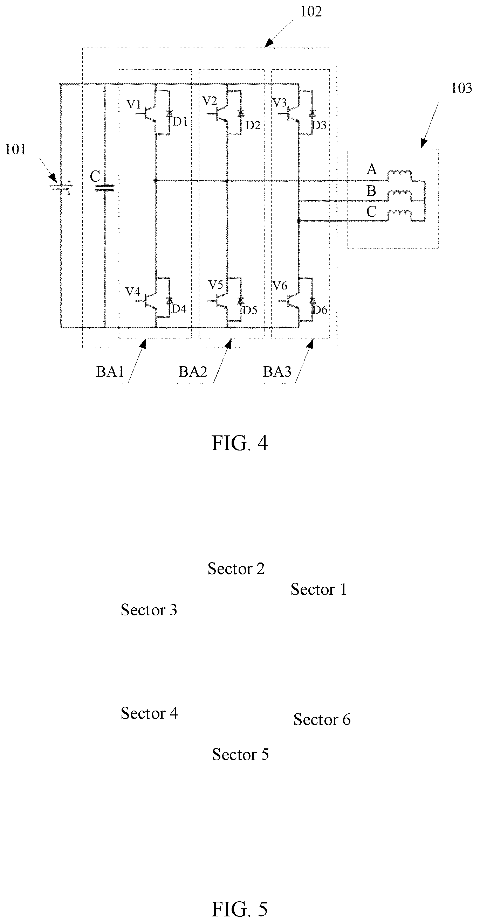

Among some embodiments, the following embodiment of this application deals with a scenario in which the motor includes a three-phase stator winding (but includes no neutral wire). For ease of understanding, a structure of the battery heating circuit is described first in some embodiments of this application. FIG. 4 is a schematic structural diagram of a battery heating circuit according to some embodiments of this application. As shown in FIG. 4, the battery heating circuit according to these embodiments of this application may include: a heating circuit and a controller (not shown in FIG. 4). The heating circuit may include: a motor 103 and a switching circuit 102 that is connected separately to the motor 103 and the battery 101.

As an example, the switching circuit 102 may include three inverter bridge arms (for example, BA1, BA2, and BA3 in FIG. 4) and a capacitor C connected in parallel to the three inverter bridge arms. The three inverter bridge arms are disposed between a three-phase stator winding (for example, with three phases A, B, and C, as shown in FIG. 4) of the motor 103 and the battery 101. A first end of each inverter bridge arm is connected to a positive electrode of the battery 101. A second end of each inverter bridge arm is connected to a negative electrode of the battery 101. Third ends of the three inverter bridge arms are connected to the phases of the three-phase stator winding of the motor 103 respectively in one-to-one correspondence. Each inverter bridge arm may include an upper bridge arm switching transistor and a lower bridge arm switching transistor. For example, the inverter bridge arm BA1 in FIG. 4 includes an upper bridge arm switching transistor V1 and a lower bridge arm switching transistor V4, the inverter bridge arm BA2 includes an upper bridge arm switching transistor V2 and a lower bridge arm switching transistor V5, and the inverter bridge arm BA3 includes an upper bridge arm switching transistor V3 and a lower bridge arm switching transistor V6.

It is hereby noted that any switching transistor in this embodiment of this application may be a switching transistor containing a body diode. For example, the diode D1 in FIG. 4 is a body diode of the switching transistor V1, the diode D2 is a body diode of the switching transistor V2, and so on, and the diode D6 is a body diode of the switching transistor V6.

Understandably, the control end of each switching transistor in this embodiment of this application is connected to the controller (not shown in FIG. 4). In this way, the controller can send a control signal to the corresponding switching transistor through the control end (for example, gate) of any switching transistor, so as to control the on-off state of the corresponding switching transistor. As an example, the control signal sent by the controller to any switching transistor may include, but is not limited to, a pulse width modulation (Pulse Width Modulation, PWM) signal.

The following embodiment of this application describes the on-off state of each switching transistor in the three inverter bridge arms in the switching circuit when the motor is in different stages.
1) When the motor is in the stator winding energy storage stage, the upper bridge arm switching transistor in the second inverter bridge arm in the switching circuit is in the on-state, and the lower bridge arm switching transistor in the first inverter bridge arm other than the second inverter bridge arm in the switching circuit is in the on-state, so as to form a discharge path through which the battery discharges electricity to the motor, and in turn, facilitate discharge of electricity from the battery to the motor and transmit the electrical energy stored in the battery to the motor. The stator winding of the motor is in the excitation energy storage state (that is, the inductance of the stator of the motor is in a state of accumulating energy progressively), so that the current in each phase of stator winding of the motor is in the stator winding energy storage stage in which the current increases gradually.

In this embodiment of this application, the controller may determine, in advance based on the rotor position of the motor, a second inverter bridge arm with an upper bridge arm switching transistor needing to be turned on among the three inverter bridge arms in the switching circuit, so that the upper bridge arm switching transistor in the second inverter bridge arm can be controlled to be in the on-state subsequently.

As an example, the controller may obtain spatial vector data. The spatial vector data may include a plurality of spatial sectors. Each spatial sector corresponds to different switching state information.

For ease of understanding, the spatial vector data is described in an embodiment of this application with reference to drawings. FIG. 5 is a schematic spatial vector diagram according to an embodiment of this application. As shown in FIG. 5, the spatial vector data in this embodiment of this application may include a plurality of spatial sectors (for example, spatial sector 1 to spatial sector 6 in FIG. 5). Each spatial sector corresponds to different switching state information. For example, the spatial sector 1 corresponds to the switching state information U4 and the switching state information U6, the spatial sector 2 corresponds to the switching state information U2 and the switching state information U6, and so on, and the spatial sector 6 corresponds to the switching state information U4 and the switching state information U5. Understandably, the digits from left to right in each piece of switching state information represent the on-off state of the upper bridge arm switching transistor connected to the corresponding phase of stator winding. In the digits, "0" represents the off-state, and "1" represents the on-state.

Further, the controller can determine a first spatial sector in which a rotor of the motor is located, and a second spatial sector symmetrical to the first spatial sector.

In this embodiment of this application, the controller can obtain the rotor position of the motor, and determine, based on the rotor position, a first spatial sector in the spatial vector data corresponding to the rotor, and a second spatial sector symmetrical to the first spatial sector. For example, if the first spatial sector in which the rotor of the motor is located is the spatial sector 1, the second spatial sector symmetrical to the first spatial sector is the spatial sector 4.

Further, the controller can determine a second inverter bridge arm based on the switching state information corresponding to the first spatial sector and the second spatial sector.

In this embodiment of this application, the controller may select arbitrary switching state information among the switching state information corresponding to the first spatial sector and the second spatial sector, and determine the second inverter bridge arm based on the data in the selected switching state information. In this way, an angle between the stator magnetic field generated by inductive excitation and the rotor magnetic field is smaller, thereby reducing the torque fluctuation generated at the beginning of heating.

For example, it is assumed that the first spatial sector in which the rotor of the motor is located is the spatial sector 1, and the controller selects the switching state information U4 (100) from the switching state information U4 and U6 corresponding to the spatial sector 1 and from the switching state information U1 and U3 corresponding to the spatial sector 4. In this case, the controller may determine, based on the data in the switching state information U4 (100), that the inverter bridge arm BA1 connected to phase A of the stator winding among the three inverter bridge arms is the second inverter bridge arm.

As can be seen, in this embodiment of this application, the second inverter bridge arm with an upper bridge arm switching transistor needing to be turned on among the three inverter bridge arms in an appropriate switching circuit can be determined based on the rotor position of the motor. In this way, an angle between a stator magnetic field generated by inductive excitation and a rotor magnetic field is relatively small, thereby reducing the torque fluctuation generated at the beginning of heating.

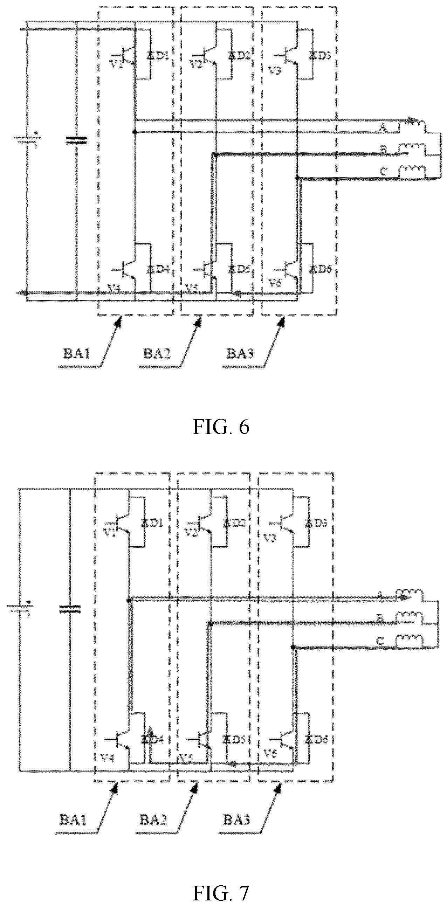

FIG. 6 is a first schematic diagram of a current direction when a motor is in a stator winding energy storage stage according to an embodiment of this application. As shown in FIG. 6, it is assumed that the second inverter bridge arm is an inverter bridge arm BA1 connected to phase A of the stator winding among the three inverter bridge arms, and the first inverter bridge arm includes an inverter bridge arm BA2 connected to phase B of the stator winding and an inverter bridge arm BA3 connected to phase C of the stator winding. In this case, when the motor is in the stator winding energy storage stage, the upper bridge arm switching transistor V1 in the inverter bridge arm BA1 is in the on-state, and the lower bridge arm switching transistor V5 in the inverter bridge arm BA2 connected to phase B of the stator winding and the lower bridge arm switching transistor V6 in the inverter bridge arm BA3 connected to phase C of the stator winding are both in the on-state, so as to form a discharge path through which the battery discharges electricity to the motor. In this way, the current across the battery flows along the following route: positive electrode of the battery→switching transistor V1→phase A of stator winding-phase B of stator winding and phase C of stator winding→switching transistor V5 and switching transistor V6→negative electrode of the battery.

2) When the motor is in the stator winding freewheeling stage, the upper bridge arm switching transistor in the second inverter bridge arm is switched to the off-state, and the lower bridge arm switching transistor in the first inverter bridge arm keeps in the on-state, so as to cut off the discharge path through which the battery discharges electricity to the motor. In this way, the stator winding of the motor is in the internal freewheeling state (without energy exchange between the battery and the stator inductance of the motor), so that the current in each phase of stator winding of the motor is in a stator winding freewheeling stage in which the current keeps unchanged.

FIG. 7 is a first schematic diagram of a current direction when a motor is in a stator winding freewheeling stage according to an embodiment of this application. As shown in FIG. 7, it is assumed that the second inverter bridge arm is an inverter bridge arm BA1 connected to phase A of the stator winding among the three inverter bridge arms, and the first inverter bridge arm includes an inverter bridge arm BA2 connected to phase B of the stator winding and an inverter bridge arm BA3 connected to phase C of the stator winding. In this case, when the motor is in the stator winding freewheeling stage, the upper bridge arm switching transistor V1 in the inverter bridge arm BA1 connected to phase A of the stator winding is switched to the off-state (so as to cut off the discharge path through which the battery discharges electricity to the motor), and the lower bridge arm switching transistor V5 in the inverter bridge arm BA2 connected to phase B of the stator winding and the lower bridge arm switching transistor V6 in the inverter bridge arm BA3 connected to phase C of the stator winding are both keep in the on-state. Internal freewheeling is performed by using the body diode D4 of the lower bridge arm switching transistor in the inverter bridge arm BA1 connected to phase A of the stator winding. The current direction of the stator winding of the motor may be: phase B of stator winding and phase C of stator winding- switching transistor V5 and switching transistor V6→body diode D4-phase A of stator winding-phase B of stator winding and phase C of stator winding.

3) When the motor is in the stator winding discharge stage, the lower bridge arm switching transistor in the first inverter bridge arm in the switching circuit is switched to the off-state, so as to form a charge path through which the motor charges the battery. In this way, the motor can discharge electricity to the battery, and transmit the electrical energy stored in the motor to the battery. The stator winding of the motor is in the energy discharge state (that is, the energy stored in the stator winding of the motor is released to the battery). Therefore, the current in each phase of stator winding of the motor is in the stator winding discharge stage in which the current decreases gradually. The first inverter bridge arm is a bridge arm in which the lower bridge arm switching transistor in the switching circuit is in an on-state when the motor is in a stator winding energy storage stage.

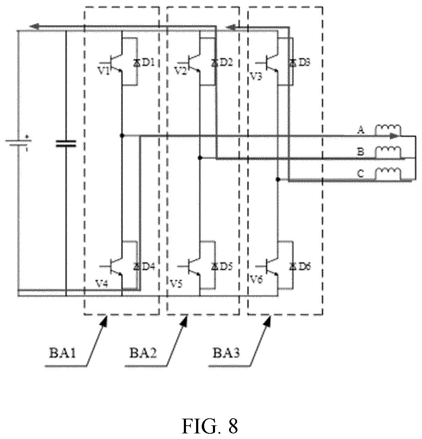

FIG. 8 is a first schematic diagram of a current direction when a motor is in a stator winding discharge stage according to an embodiment of this application. As shown in FIG. 8, it is assumed that the second inverter bridge arm is an inverter bridge arm BA1 connected to phase A of the stator winding among the three inverter bridge arms, and the first inverter bridge arm includes an inverter bridge arm BA2 connected to phase B of the stator winding and an inverter bridge arm BA3 connected to phase C of the stator winding. In this case, when the motor is in the stator winding discharge stage, the lower bridge arm switching transistor V5 in the inverter bridge arm BA2 connected to phase B of the stator winding and the lower bridge arm switching transistor V6 in the inverter bridge arm BA3 connected to phase C of the stator winding are switched to the off-state, so as to form a charge path through which the motor charges the battery, and release the energy stored in the stator winding of the motor to the battery. The current across the battery flows along the following route: negative electrode of the battery-body diode D4-phase A of stator winding-phase B of stator winding and phase C of stator winding-body diode D2 and body diode D3→positive electrode of the battery.

4) When the motor is in a stator winding current interruption stage, the lower bridge arm switching transistor in the first inverter bridge arm keeps in the off-state, so as to form an energy oscillation path between the capacitor C in the heating circuit and the battery. Because the energy stored in the stator winding of the motor is fully released, the current in each phase of stator winding is in the stator winding current interruption stage in which the current is zero. In this stage, the capacitor in the heating circuit exchanges energy with the battery through oscillation, so as to improve the energy utilization rate during heating of the battery.

In this embodiment of this application, when the motor is in different stages, the on-off states of the switching transistors in the three inverter bridge arms in the switching circuit are different, so as to keep the current direction unchanged in each phase of stator winding when the motor heats the battery, and in turn, increase the current harmonics of the stator winding of the motor, disperse the vibration noise energy generated when the motor heats the battery, and therefore, alleviate the vibration noise generated when the motor heats the battery.

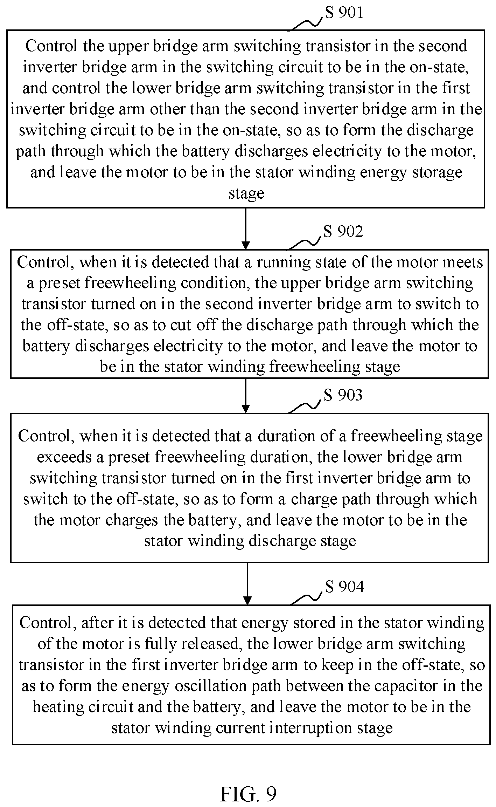

In some embodiments, FIG. 9 is a schematic flowchart of a battery heating method according to some other embodiments of this application. On the basis of the above embodiment, in this embodiment of this application, the following describes an implementation of "controlling the on-off state of the switching transistor in the switching circuit in response to the heating enable signal" in step S202 above in a case that the motor includes a three-phase stator winding (but includes no neutral wire). As shown in FIG. 9, the method according to this embodiment of this application may include the following steps:

Step S901: Control the upper bridge arm switching transistor in the second inverter bridge arm in the switching circuit to be in the on-state, and control the lower bridge arm switching transistor in the first inverter bridge arm other than the second inverter bridge arm in the switching circuit to be in the on-state, so as to form the discharge path through which the battery discharges electricity to the motor, and leave the motor to be in the stator winding energy storage stage.

In this step, the controller can control the upper bridge arm switching transistor in the second inverter bridge arm among the three inverter bridge arms in the switching circuit to be in the on-state, and control the lower bridge arm switching transistor in the first inverter bridge arm other than the second inverter bridge arm among the three inverter bridge arms to be in the on-state, so as to form a discharge path through which the battery discharges electricity to the motor (for example, as shown in FIG. 6, the current flows along the following route: positive electrode of the battery- switching transistor V1→phase A of stator winding-phase B of stator winding and phase C of stator winding-switching transistor V5 and switching transistor V6→negative electrode of the battery), and facilitate discharge of electricity from the battery to the motor. In this way, the stator winding of the motor is in an excitation energy storage state (or, in other words, the motor is in a stator winding energy storage stage), so that the current in each phase of stator winding of the motor is in the stator winding energy storage stage in which the current increases gradually.

Step S902: Control, when it is detected that a running state of the motor meets a preset freewheeling condition, the upper bridge arm switching transistor turned on in the second inverter bridge arm to switch to the off-state, so as to cut off the discharge path through which the battery discharges electricity to the motor, and leave the motor to be in the stator winding freewheeling stage.

In this step, when it is detected that the running state of the motor meets the preset freewheeling condition, the controller controls the upper bridge arm switching transistor turned on in the second inverter bridge arm in step S901 to switch to the off-state, so as to cut off the discharge path through which the battery discharges electricity to the motor, and leave the stator winding of the motor to be in an internal freewheeling state (without energy exchange between the battery and the stator inductance of the motor). In this way, the current in each phase of stator winding of the motor is in the stator winding freewheeling stage in which the current keeps unchanged. For example, as shown in FIG. 7, after the discharge path through which the battery discharges electricity to the motor is cut off, the current direction in the stator winding of the motor may be: phase B of stator winding and phase C of stator winding-switching transistor V5 and switching transistor V6→body diode D4-phase A of stator winding-phase B of stator winding and phase C of stator winding. As can be seen, the stator winding of the motor is in the internal freewheeling state (or, in other words, the motor is in the stator winding freewheeling stage).

As an example, when detecting that the duration of the excitation energy storage state exceeds a preset energy storage time or that the current in the stator winding reaches a preset current, the controller determines that the running state of the motor meets the preset freewheeling condition. Definitely, the controller may determine, by other means, whether the running state of the motor meets the preset freewheeling condition. The determining method is not limited herein.

Step S903: Control, when it is detected that a duration of a freewheeling stage exceeds a preset freewheeling duration, the lower bridge arm switching transistor turned on in the first inverter bridge arm to switch to the off-state, so as to form a charge path through which the motor charges the battery, and leave the motor to be in the stator winding discharge stage.

In this step, when detecting that the duration of the freewheeling stage exceeds the preset freewheeling duration, the controller may control the lower bridge arm switching transistor turned on in the first inverter bridge arm in steps S901 and S902 to switch to the off-state, so as to form a charge path through which the motor charges the battery (for example, as shown in FIG. 8, the current flows along the following route: negative electrode of the battery-body diode D4→phaseA of stator winding-phase B of stator winding and phase C of stator winding-body diode D2 and body diode D3→positive electrode of the battery), and facilitate discharge of electricity from the motor to the battery. In this way, the stator winding of the motor is in the energy discharge state (that is, the energy stored in the stator winding of the motor is released to the battery). Therefore, the current in each phase of stator winding of the motor is in the stator winding discharge stage in which the current decreases gradually.

Step S904: Control, after it is detected that energy stored in the stator winding of the motor is fully released, the lower bridge arm switching transistor in the first inverter bridge arm to keep in the off-state, so as to form the energy oscillation path between the capacitor in the heating circuit and the battery, and leave the motor to be in the stator winding current interruption stage.

In this step, after detecting that the energy stored in the stator winding of the motor is fully released, the controller controls the lower bridge arm switching transistor in the first inverter bridge arm in step S903 to keep in the off-state, so as to form an energy oscillation path between the capacitor and the battery, and facilitate discharge of electricity from the capacitor to the battery. In this way, the motor is in the stator winding current interruption stage, so that the current in each phase of stator winding of the motor is in the stator winding current interruption stage in which the current is zero.

Understandably, steps S901 to S904 above may be steps that are cyclically repeated until the controller detects that the heating stop condition is met.

In this embodiment of this application, by controlling the on-off state of the upper bridge arm switching transistor in the second inverter bridge arm and the lower bridge arm switching transistor in the first inverter bridge arm among the three inverter bridge arms in the switching circuit, the motor can heat the battery while keeping the current direction unchanged in each phase of stator winding, thereby increasing the current harmonics of the stator winding of the motor, and in turn, dispersing the vibration noise energy generated when the motor heats the battery. In addition, the controller can also control the interruption duration in which the motor is in the stator winding current interruption state, and reduce the effective value of the current of the stator winding while keeping the effective value of the current waveform of the battery unchanged, thereby further reducing the motor noise. Therefore, compared with the conventional technology, this embodiment of this application can effectively alleviate the motor noise without compromising the effect of battery heating.

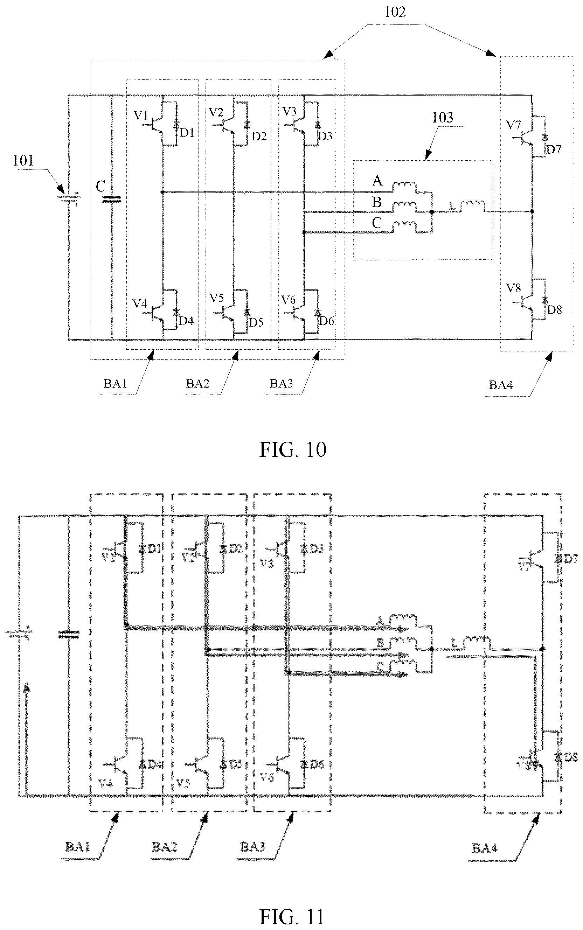

Among some embodiments, the following embodiment of this application deals with a scenario in which the motor includes a three-phase stator winding and a neutral wire. For ease of understanding, a structure of the battery heating circuit is described first in some embodiments of this application. FIG. 10 is a schematic structural diagram of a battery heating circuit according to some other embodiments of this application. As shown in FIG. 10, the battery heating circuit according to these embodiments of this application may include: a heating circuit and a controller (not shown in FIG. 10). The heating circuit may include: a motor 103 and a switching circuit 102 that is connected separately to the motor 103 and the battery 101.

As an example, the switching circuit 102 may include: a neutral bridge arm BA4 disposed between a neutral wire L of the motor 103 and the battery 101, three inverter bridge arms (for example, BA1, BA2, and BA3 in FIG. 10), and a capacitor C connected in parallel to the three inverter bridge arms. The three inverter bridge arms are disposed between a three-phase stator winding (for example, with three phases A, B, and C, as shown in FIG. 10) of the motor 103 and the battery 101. A first end of each inverter bridge arm and a first end of the neutral bridge arm BA4 each are connected to a positive electrode of the battery 101. A second end of each inverter bridge arm and a second end of the neutral bridge arm BA4 each are connected to a negative electrode of the battery 101. Third ends of the three inverter bridge arms are connected to the phases of the three-phase stator winding of the motor 103 respectively in one-to-one correspondence. A third end of the neutral bridge arm BA4 is connected to the neutral wire L of the motor. Each inverter bridge arm may include an upper bridge arm switching transistor and a lower bridge arm switching transistor. The neutral bridge arm may include an upper bridge arm switching transistor and a lower bridge arm switching transistor. For example, the neutral bridge arm BA4 in FIG. 10 may include an upper bridge arm switching transistor V and a lower bridge arm switching transistor V8.

It is hereby noted that any switching transistor in this embodiment of this application may be a switching transistor containing a body diode. For example, the diode D7 in FIG. 10 is a body diode of the switching transistor V7, and the diode D8 is a body diode of the switching transistor V8.

Understandably, the control end (for example, gate) of each switching transistor in this embodiment of this application is connected to the controller (not shown in FIG. 10). In this way, the controller can send a control signal to the corresponding switching transistor through the control end of any switching transistor, so as to control the on-off state of the corresponding switching transistor.

The following embodiment of this application describes the on-off state of each switching transistor in the three inverter bridge arms and the neutral bridge arm in the switching circuit when the motor is in different stages.

In a possible implementation: 1) when the motor is in the stator winding energy storage stage, the upper bridge arm switching transistor in each inverter bridge arm in the switching circuit is in the on-state, and the lower bridge arm switching transistor in the neutral bridge arm is in the on-state, so as to form a discharge path through which the battery discharges electricity to the motor; 2) when the motor is in the stator winding freewheeling stage, the upper bridge arm switching transistor in each inverter bridge arm is switched to the off-state so as to cut off the discharge path through which the battery discharges electricity to the motor, and the lower bridge arm switching transistor in the neutral bridge arm keeps in the on-state; 3) when the motor is in the stator winding discharge stage, the lower bridge arm switching transistor in the neutral bridge arm is switched to the off-state, so as to form a charge path through which the motor charges the battery; 4) when the motor is in the stator winding current interruption stage, the lower bridge arm switching transistor in the neutral bridge arm keeps in the off-state, so as to form an energy oscillation path between the capacitor and the battery.

Due to the particularity of the structure of the motor with a neutral wire, a same-phase current can be passed into the three-phase stator winding of the motor. In this implementation, when the motor is in the stator winding energy storage stage, the upper bridge arm switching transistor in each inverter bridge arm in the switching circuit is in the on-state, and the lower bridge arm switching transistor in the neutral bridge arm is in the on-state, so as to form a discharge path through which the battery discharges electricity to the motor, and in turn, facilitate discharge of electricity from the battery to the motor and transmit the electrical energy stored in the battery to the motor. The stator winding of the motor is in the excitation energy storage state (that is, the inductance of the stator of the motor is in a state of accumulating energy progressively), so that the current in each phase of stator winding of the motor is in the stator winding energy storage stage in which the current increases gradually.

FIG. 11 is a second schematic diagram of a current direction when a motor is in a stator winding energy storage stage according to an embodiment of this application. As shown in FIG. 11, when the motor is in the stator winding energy storage stage, the upper bridge arm switching transistor V1 in the inverter bridge arm BA1 connected to phase A of stator winding, the upper bridge arm switching transistor V2 in the inverter bridge arm BA2 connected to phase B of stator winding, and the upper bridge arm switching transistor V3 in the inverter bridge arm BA3 connected to phase C of stator winding are in the on-state, and the lower bridge arm switching transistor V8 in the neutral bridge arm BA4 is in the on-state, so as to form a discharge path through which the battery discharges electricity to the motor. In this way, the current across the battery flows along the following route: positive electrode of the battery→switching transistor V1, switching transistor V2, and switching transistor V3→phase A of stator winding, phase B of stator winding, and phase C of stator winding-neutral wire L→switching transistor V8→negative electrode of the battery.

In this implementation, when the motor is in the stator winding freewheeling stage, the upper bridge arm switching transistor in each inverter bridge arm is switched to the off-state, so as to cut off the discharge path through which the battery discharges electricity to the motor, and the lower bridge arm switching transistor in the neutral bridge arm keeps in the on-state. In this way, the stator winding of the motor is in the internal freewheeling state (without energy exchange between the battery and the stator inductance of the motor), so that the current in each phase of stator winding of the motor is in a stator winding freewheeling stage in which the current keeps unchanged.

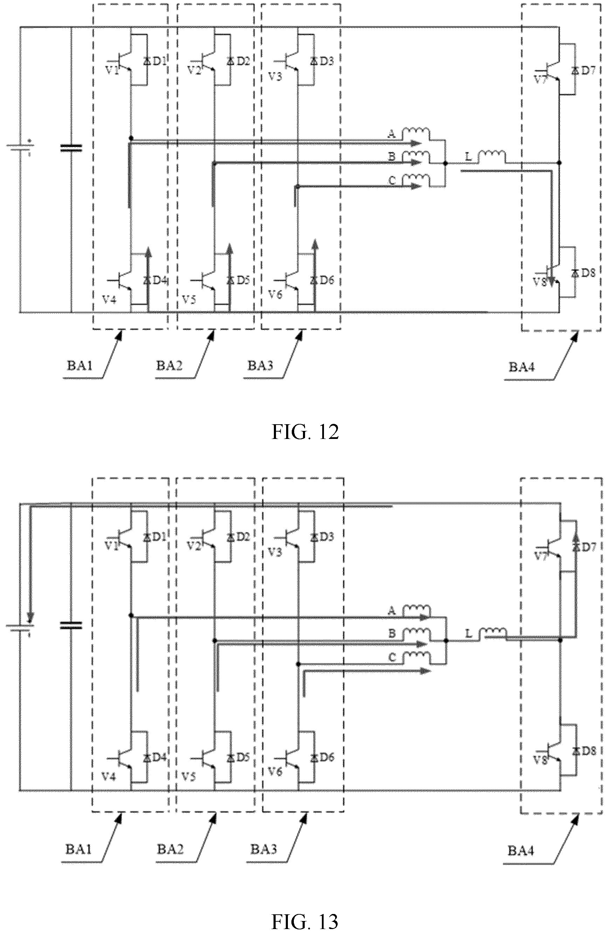

FIG. 12 is a second schematic diagram of a current direction when a motor is in a stator winding freewheeling stage according to an embodiment of this application. As shown in FIG. 12, when the motor is in the stator winding freewheeling stage, the upper bridge arm switching transistor V1 in the inverter bridge arm BA1 connected to phase A of stator winding, the upper bridge arm switching transistor V2 in the inverter bridge arm BA2 connected to phase B of stator winding, and the upper bridge arm switching transistor V3 in the inverter bridge arm BA3 connected to phase C of stator winding are switched to the off-state, and the lower bridge arm switching transistor V8 in the neutral bridge arm BA4 keeps in the on-state. Internal freewheeling is performed by using the body diode D4 of the lower bridge arm switching transistor in the inverter bridge arm BA1 connected to phase A of stator winding, the body diode D5 of the lower bridge arm switching transistor in the inverter bridge arm BA2 connected to phase B of stator winding, and the body diode D6 of the lower bridge arm switching transistor in the inverter bridge arm BA3 connected to phase C of stator winding. The current direction in the stator winding of the motor may be: phase A of stator winding, phase B of stator winding, and phase C of stator winding-neutral wire L→switching transistor V8→body diode D4, body diode D5, and body diode D6-phase A of stator winding, phase B of stator winding, and phase C of stator winding.

In this implementation, when the motor is in the stator winding discharge stage, the lower bridge arm switching transistor in the neutral bridge arm is switched to the off-state, so as to form a charge path through which the motor charges the battery. In this way, the motor can discharge electricity to the battery, and transmit the electrical energy stored in the motor to the battery. The stator winding of the motor is in the energy discharge state (that is, the energy stored in the stator winding of the motor is released to the battery). Therefore, the current in each phase of stator winding of the motor is in the stator winding discharge stage in which the current decreases gradually.

FIG. 13 is a second schematic diagram of a current direction when a motor is in a stator winding discharge stage according to an embodiment of this application. As shown in FIG. 13, when the motor is in the stator winding discharge stage, the lower bridge arm switching transistor V8 in the neutral bridge arm BA4 is switched to the off-state, so as to form a charge path through which the motor charges the battery, and release the energy stored in the stator winding of the motor to the battery. The current across the battery flows along the following route: negative electrode of the battery→body diode D4, body diode D5, and body diode D6-phase A of stator winding, phase B of stator winding, and phase C of stator winding-neutral wire L→body diode D7-positive electrode of the battery.

In this implementation, when the motor is in the stator winding current interruption stage, the lower bridge arm switching transistor in the neutral bridge arm keeps in the off-state, so as to form an energy oscillation path between the capacitor and the battery. Because the energy stored in the stator winding of the motor is fully released, the current in each phase of stator winding is in the stator winding current interruption stage in which the current is zero. In this stage, the capacitor in the heating circuit exchanges energy with the battery through oscillation, so as to improve the energy utilization rate during heating of the battery.

In another possible implementation: 1) when the motor is in the stator winding energy storage stage, the lower bridge arm switching transistor in each inverter bridge arm in the switching circuit is in the on-state, and the upper bridge arm switching transistor in the neutral bridge arm is in the on-state, so as to form a discharge path through which the battery discharges electricity to the motor. 2) When the motor is in the stator winding freewheeling stage, the lower bridge arm switching transistor in each inverter bridge arm is switched to the off-state so as to cut off the discharge path through which the battery discharges electricity to the motor, and the upper bridge arm switching transistor in the neutral bridge arm keeps in the on-state. 3) When the motor is in the stator winding discharge stage, the upper bridge arm switching transistor in the neutral bridge arm is switched to the off-state, so as to form a charge path through which the motor charges the battery. 4) When the motor is in the stator winding current interruption stage, the upper bridge arm switching transistor in the neutral bridge arm keeps in the off-state, so as to form an energy oscillation path between the capacitor and the battery.

In this implementation, when the motor is in the stator winding energy storage stage, the lower bridge arm switching transistor in each inverter bridge arm in the switching circuit is in the on-state, and the upper bridge arm switching transistor in the neutral bridge arm is in the on-state, so as to form a discharge path through which the battery discharges electricity to the motor, and in turn, facilitate discharge of electricity from the battery to the motor and transmit the electrical energy stored in the battery to the motor. The stator winding of the motor is in the excitation energy storage state (that is, the inductance of the stator of the motor is in a state of accumulating energy progressively), so that the current in each phase of stator winding of the motor is in the stator winding energy storage stage in which the current increases gradually.

For example, referring to FIG. 11, when the motor is in the stator winding energy storage stage, the lower bridge arm switching transistor V4 in the inverter bridge arm BA1 connected to phase A of stator winding, the lower bridge arm switching transistor V5 in the inverter bridge arm BA2 connected to phase B of stator winding, and the lower bridge arm switching transistor V6 in the inverter bridge arm BA3 connected to phase C of stator winding are in the on-state, and the upper bridge arm switching transistor V7 in the neutral bridge arm BA4 is in the on-state. In this way, the current across the battery flows along the following route: positive electrode of the battery-switching transistor V7-neutral wire L-phase A of stator winding, phase B of stator winding, and phase C of stator winding-switching transistor V4, switching transistor V5, and switching transistor V6→negative electrode of the battery.

In this implementation, when the motor is in the stator winding freewheeling stage, the lower bridge arm switching transistor in each inverter bridge arm is switched to the off-state, so as to cut off the discharge path through which the battery discharges electricity to the motor, and the upper bridge arm switching transistor in the neutral bridge arm keeps in the on-state. In this way, the stator winding of the motor is in the internal freewheeling state (without energy exchange between the battery and the stator inductance of the motor), so that the current in each phase of stator winding of the motor is in a stator winding freewheeling stage in which the current keeps unchanged.

For example, referring to FIG. 12, when the motor is in the stator winding freewheeling stage, the lower bridge arm switching transistor V4 in the inverter bridge arm BA1 connected to phase A of stator winding, the lower bridge arm switching transistor V5 in the inverter bridge arm BA2 connected to phase B of stator winding, and the lower bridge arm switching transistor V6 in the inverter bridge arm BA3 connected to phase C of stator winding are switched to the off-state, and the upper bridge arm switching transistor V7 in the neutral bridge arm BA4 keeps in the on-state. Internal freewheeling is performed by using the body diode D1 of the upper bridge arm switching transistor in the inverter bridge arm BA1 connected to phase A of stator winding, the body diode D2 of the upper bridge arm switching transistor in the inverter bridge arm BA2 connected to phase B of stator winding, and the body diode D3 of the upper bridge arm switching transistor in the inverter bridge arm BA3 connected to phase C of stator winding. The current direction in the stator winding of the motor may be: switching transistor V7-neutral wire L-phase A of stator winding, phase B of stator winding, and phase C of stator winding-body diode D1, body diode D2, and body diode D3→switching transistor V7.

In this implementation, when the motor is in the stator winding discharge stage, the upper bridge arm switching transistor in the neutral bridge arm is switched to the off-state, so as to form a charge path through which the motor charges the battery. In this way, the motor can discharge electricity to the battery, and transmit the electrical energy stored in the motor to the battery. The stator winding of the motor is in the energy discharge state (that is, the energy stored in the stator winding of the motor is released to the battery). Therefore, the current in each phase of stator winding of the motor is in the stator winding discharge stage in which the current decreases gradually.

For example, referring to FIG. 13, when the motor is in the stator winding discharge stage, the upper bridge arm switching transistor V7 in the neutral bridge arm BA4 is switched to the off-state, so as to form a charge path through which the motor charges the battery, and release the energy stored in the stator winding of the motor to the battery. The current across the battery flows along the following route: negative electrode of the battery-body diode D8-neutral wire L-phase A of stator winding, phase B of stator winding, and phase C of stator winding-body diode D1, body diode D2, and body diode D3→positive electrode of the battery.

In this implementation, when the motor is in the stator winding current interruption stage, the upper bridge arm switching transistor in the neutral bridge arm keeps in the off-state, so as to form an energy oscillation path between the capacitor and the battery. Because the energy stored in the stator winding of the motor is fully released, the current in each phase of stator winding is in the stator winding current interruption stage in which the current is zero. In this stage, the capacitor in the heating circuit exchanges energy with the battery through oscillation, so as to improve the energy utilization rate during heating of the battery.

In this embodiment of this application, when the motor is in different stages, the on-off states of the switching transistors in the three inverter bridge arms and the neutral bridge arm are different, so as to keep the current direction unchanged in each phase of stator winding when the motor heats the battery, and in turn, increase the current harmonics of the stator winding of the motor, disperse the vibration noise energy generated when the motor heats the battery, and therefore, alleviate the vibration noise generated when the motor heats the battery.

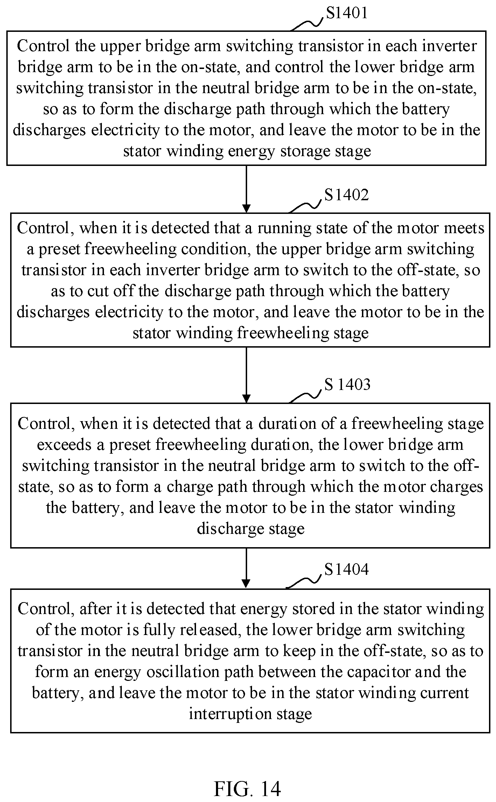

In some embodiments, FIG. 14 is a schematic flowchart of a battery heating method according to some other embodiments of this application. On the basis of the above embodiment, in this embodiment of this application, the following describes another implementation of "controlling the on-off state of the switching transistor in the switching circuit in response to the heating enable signal" in step S202 above in a case that the motor includes a three-phase stator winding and a neutral wire. As shown in FIG. 14, the method according to this embodiment of this application may include the following steps:
Step S1401: Control the upper bridge arm switching transistor in each inverter bridge arm to be in the on-state, and control the lower bridge arm switching transistor in the neutral bridge arm to be in the on-state, so as to form the discharge path through which the battery discharges electricity to the motor, and leave the motor to be in the stator winding energy storage stage.

In this step, the controller can control the upper bridge arm switching transistor in each inverter bridge arm to be in the on-state, and control the lower bridge arm switching transistor in the neutral bridge arm to be in the on-state, so as to form a discharge path through which the battery discharges electricity to the motor (for example, as shown in FIG. 11, the current flows along the following route: positive electrode of the battery- switching transistor V1, switching transistor V2, and switching transistor V3-phase A of stator winding, phase B of stator winding, and phase C of stator winding-neutral wire L→switching transistor V8→negative electrode of the battery), and facilitate discharge of electricity from the battery to the motor. In this way, the stator winding of the motor is in an excitation energy storage state (or, in other words, the motor is in a stator winding energy storage stage), so that the current in each phase of stator winding of the motor is in the stator winding energy storage stage in which the current increases gradually.

Step S1402: Control, when it is detected that a running state of the motor meets a preset freewheeling condition, the upper bridge arm switching transistor in each inverter bridge arm to switch to the off-state, so as to cut off the discharge path through which the battery discharges electricity to the motor, and leave the motor to be in the stator winding freewheeling stage.

In this step, when it is detected that the running state of the motor meets the preset freewheeling condition, the controller may control the upper bridge arm switching transistor in each inverter bridge arm to switch to the off-state, so as to cut off the discharge path through which the battery discharges electricity to the motor, and leave the stator winding of the motor to be in an internal freewheeling state (without energy exchange between the battery and the stator inductance of the motor). In this way, the current in each phase of stator winding of the motor is in the stator winding freewheeling stage in which the current keeps unchanged. For example, as shown in FIG. 12, after the discharge path through which the battery discharges electricity to the motor is cut off, the current direction in the stator winding of the motor may be: phase A of stator winding, phase B of stator winding, and phase C of stator winding-neutral wire L→switching transistor V8-body diode D4, body diode D5, and body diode D6→phase A of stator winding, phase B of stator winding, and phase C of stator winding. As can be seen, the stator winding of the motor is in the internal freewheeling state (or, in other words, the motor is in the stator winding freewheeling stage).

Step S1403: Control, when it is detected that a duration of a freewheeling stage exceeds a preset freewheeling duration, the lower bridge arm switching transistor in the neutral bridge arm to switch to the off-state, so as to form a charge path through which the motor charges the battery, and leave the motor to be in the stator winding discharge stage.

In this step, when detecting that the duration of the freewheeling stage exceeds the preset freewheeling duration, the controller may control the lower bridge arm switching transistor in the neutral bridge arm to switch to the off-state, so as to form a charge path through which the motor charges the battery (for example, as shown in FIG. 13, the current flows along the following route: negative electrode of the battery-body diode D4, body diode D5, and body diode D6-phase A of stator winding, phase B of stator winding, and phase C of stator winding-neutral wire L-body diode D7-positive electrode of the battery), and facilitate discharge of electricity from the motor to the battery. In this way, the stator winding of the motor is in the energy discharge state (that is, the energy stored in the stator winding of the motor is released to the battery). Therefore, the current in each phase of stator winding of the motor is in the stator winding discharge stage in which the current decreases gradually.

Step S1404: Control, after it is detected that energy stored in the stator winding of the motor is fully released, the lower bridge arm switching transistor in the neutral bridge arm to keep in the off-state, so as to form the energy oscillation path between the capacitor and the battery, and leave the motor to be in the stator winding current interruption stage.

In this step, after detecting that the energy stored in the stator winding of the motor is fully released, the controller may control the lower bridge arm switching transistor in the neutral bridge arm to keep in the off-state, so as to form an energy oscillation path between the capacitor and the battery, and facilitate discharge of electricity from the capacitor to the battery. In this way, the motor is in the stator winding current interruption stage, so that the current in each phase of stator winding of the motor is in the stator winding current interruption stage in which the current is zero.

Understandably, steps S1401 to S1403 above may be steps that are cyclically repeated until the controller detects that the heating stop condition is met.

In this embodiment of this application, by controlling the on-off state of the upper bridge arm switching transistor in each inverter bridge arm and the lower bridge arm switching transistor in the neutral bridge arm in the switching circuit, the motor can heat the battery while keeping the current direction unchanged in each phase of stator winding, thereby increasing the current harmonics of the stator winding of the motor, and in turn, dispersing the vibration noise energy generated when the motor heats the battery. In addition, the controller can also control the interruption duration in which the motor is in the stator winding current interruption state, and reduce the effective value of the current of the stator winding while keeping the effective value of the current waveform of the battery unchanged, thereby further reducing the motor noise. Therefore, compared with the conventional technology, this embodiment of this application can effectively alleviate the motor noise without compromising the effect of battery heating.

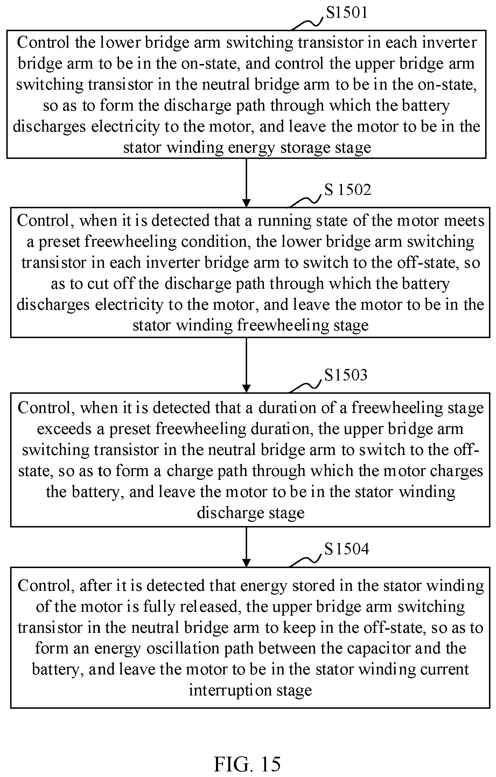

In some embodiments, FIG. 15 is a schematic flowchart of a battery heating method according to some other embodiments of this application. On the basis of the above embodiment, in this embodiment of this application, the following describes another implementation of "controlling the on-off state of the switching transistor in the switching circuit in response to the heating enable signal" in step S202 above in a case that the motor includes a three-phase stator winding and a neutral wire. As shown in FIG. 15, the method according to this embodiment of this application may include the following steps:
Step S1501: Control the lower bridge arm switching transistor in each inverter bridge arm to be in the on-state, and control the upper bridge arm switching transistor in the neutral bridge arm to be in the on-state, so as to form the discharge path through which the battery discharges electricity to the motor, and leave the motor to be in the stator winding energy storage stage.

In this step, the controller can control the lower bridge arm switching transistor in each inverter bridge arm to be in the on-state, and control the upper bridge arm switching transistor in the neutral bridge arm to be in the on-state, so as to form a discharge path through which the battery discharges electricity to the motor (for example, referring to FIG. 11, the current flows along the following route: positive electrode of the battery- switching transistor V7-neutral wire L-phase A of stator winding, phase B of stator winding, and phase C of stator winding- switching transistor V4, switching transistor V5, and switching transistor V6→negative electrode of the battery), and facilitate discharge of electricity from the battery to the motor. In this way, the stator winding of the motor is in an excitation energy storage state (or, in other words, the motor is in a stator winding energy storage stage), so that the current in each phase of stator winding of the motor is in the stator winding energy storage stage in which the current increases gradually.

Step S1502: Control, when it is detected that a running state of the motor meets a preset freewheeling condition, the lower bridge arm switching transistor in each inverter bridge arm to switch to the off-state, so as to cut off the discharge path through which the battery discharges electricity to the motor, and leave the motor to be in the stator winding freewheeling stage.

In this step, when it is detected that the running state of the motor meets the preset freewheeling condition, the controller may control the lower bridge arm switching transistor in each inverter bridge arm to switch to the off-state, so as to cut off the discharge path through which the battery discharges electricity to the motor, and leave the stator winding of the motor to be in an internal freewheeling state (without energy exchange between the battery and the stator inductance of the motor). In this way, the current in each phase of stator winding of the motor is in the stator winding freewheeling stage in which the current keeps unchanged. For example, referring to FIG. 12, after the discharge path through which the battery discharges electricity to the motor is cut off, the current direction in the stator winding of the motor may be: switching transistor V7-neutral wire L-phase A of stator winding, phase B of stator winding, and phase C of stator winding-body diode D1, body diode D2, and body diode D3→switching transistor V7. As can be seen, the stator winding of the motor is in the internal freewheeling state (or, in other words, the motor is in the stator winding freewheeling stage).

Step S1503: Control, when it is detected that a duration of a freewheeling stage exceeds a preset freewheeling duration, the upper bridge arm switching transistor in the neutral bridge arm to switch to the off-state, so as to form a charge path through which the motor charges the battery, and leave the motor to be in the stator winding discharge stage.

In this step, when detecting that the duration of the freewheeling stage exceeds the preset freewheeling duration, the controller may control the upper bridge arm switching transistor in the neutral bridge arm to switch to the off-state, so as to form a charge path through which the motor charges the battery (for example, referring to FIG. 13, the current flows along the following route: negative electrode of the battery-body diode D8-neutral wire L-phase A of stator winding, phase B of stator winding, and phase C of stator winding-body diode D1, body diode D2, and body diode D3-positive electrode of the battery), and facilitate discharge of electricity from the motor to the battery. In this way, the stator winding of the motor is in the energy discharge state (that is, the energy stored in the stator winding of the motor is released to the battery). Therefore, the current in each phase of stator winding of the motor is in the stator winding discharge stage in which the current decreases gradually.

Step S1504: Control, after it is detected that energy stored in the stator winding of the motor is fully released, the upper bridge arm switching transistor in the neutral bridge arm to keep in the off-state, so as to form the energy oscillation path between the capacitor and the battery, and leave the motor to be in the stator winding current interruption stage.

In this step, after detecting that the energy stored in the stator winding of the motor is fully released, the controller may control the upper bridge arm switching transistor in the neutral bridge arm to keep in the off-state, so as to form an energy oscillation path between the capacitor and the battery, and facilitate discharge of electricity from the capacitor to the battery. In this way, the motor is in the stator winding current interruption stage, so that the current in each phase of stator winding of the motor is in the stator winding current interruption stage in which the current is zero.

Understandably, steps S1501 to S1503 above may be steps that are cyclically repeated until the controller detects that the heating stop condition is met.

In this embodiment of this application, by controlling the on-off state of the lower bridge arm switching transistor in each inverter bridge arm and the upper bridge arm switching transistor in the neutral bridge arm in the switching circuit, the motor can heat the battery while keeping the current direction unchanged in each phase of stator winding, thereby increasing the current harmonics of the stator winding of the motor, and in turn, dispersing the vibration noise energy generated when the motor heats the battery. In addition, the controller can also control the interruption duration in which the motor is in the stator winding current interruption state, and reduce the effective value of the current of the stator winding while keeping the effective value of the current waveform of the battery unchanged, thereby further reducing the motor noise. Therefore, compared with the conventional technology, this embodiment of this application can effectively alleviate the motor noise without compromising the effect of battery heating.

Understandably, although the steps in a flowchart related to each of the above embodiments are sequentially displayed as indicated by arrows, the steps are not necessarily performed in the order indicated by the arrows. Unless otherwise expressly specified herein, the order of performing the steps is not strictly limited, and the steps may be performed in other order. Moreover, at least a part of the steps in the flowchart related to each embodiment described above may include a plurality of substeps or stages. The substeps or stages are not necessarily performed at the same time, but may be performed at different times. The substeps or stages are not necessarily performed sequentially, but may take turns with or alternate with other steps or at least a part of substeps or stages of other steps.

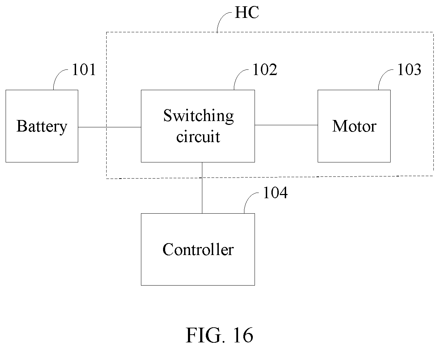

In some embodiments, based on the same inventive concept, an embodiment of this application further provides a battery heating circuit. FIG. 16 is a schematic structural diagram of a battery heating circuit according to some other embodiments of this application. As shown in FIG. 16, on the basis of the above embodiment, the battery heating circuit according to these embodiments of this application may include a heating circuit HC and a controller 104. The heating circuit HC may include: a motor 103 and a switching circuit 102 that is connected separately to the motor 103 and the battery 101.

The controller 104 is configured to control, after obtaining a heating enable signal, an on-off state of a switching transistor in the switching circuit in response to the heating enable signal so that the motor heats the battery while keeping a current direction unchanged in each phase of stator winding of the motor. The heating enable signal is used for instructing the motor to heat the battery based on the heating circuit.

In some embodiments, a current in each phase of stator winding changes cyclically. A current cycle of each phase of stator winding includes: a stator winding energy storage stage in which the current increases gradually, a stator winding freewheeling stage in which the current remains constant, a stator winding discharge stage in which the current decreases gradually, and a stator winding current interruption stage in which the current is zero.

In some embodiments, in the stator winding current interruption stage in which the current is zero, the battery is charged by a capacitor in the heating circuit. The capacitor is connected in series between two terminals of the battery.

In some embodiments, a current in each phase of stator winding is a half-wave current.

In some embodiments, the switching circuit 102 includes three inverter bridge arms and a capacitor connected in parallel to the three inverter bridge arms. The three inverter bridge arms are disposed between a three-phase stator winding of the motor and the battery. A first end of each inverter bridge arm is connected to a positive electrode of the battery. A second end of each inverter bridge arm is connected to a negative electrode of the battery. Third ends of the three inverter bridge arms are connected to corresponding phases of the three-phase stator winding of the motor respectively. Each inverter bridge arm includes an upper bridge arm switching transistor and a lower bridge arm switching transistor.

When the motor is in a stator winding discharge stage, the lower bridge arm switching transistor in a first inverter bridge arm in the switching circuit is switched to an off-state to form a charge path through which the motor charges the battery, so as to transmit electrical energy stored in the motor to the battery. The first inverter bridge arm is a bridge arm in which the lower bridge arm switching transistor in the switching circuit is in an on-state when the motor is in a stator winding energy storage stage.

In some embodiments, when the motor is in the stator winding energy storage stage, the upper bridge arm switching transistor in a second inverter bridge arm in the switching circuit is in an on-state, and the lower bridge arm switching transistor in the first inverter bridge arm other than the second inverter bridge arm in the switching circuit is in the on-state, so as to form a discharge path through which the battery discharges electricity to the motor, and in turn, transmit electrical energy stored in the battery to the motor.

In some embodiments, when the motor is in a stator winding freewheeling stage, the upper bridge arm switching transistor in the second inverter bridge arm is switched to the off-state, and the lower bridge arm switching transistor in the first inverter bridge arm keeps in the on-state, so as to cut off the discharge path through which the battery discharges electricity to the motor.

In some embodiments, when the motor is in a stator winding current interruption stage, the lower bridge arm switching transistor in the first inverter bridge arm keeps in the off-state, so as to form an energy oscillation path between the capacitor in the heating circuit and the battery.

In some embodiments, the controller 104 is specifically configured to: control the upper bridge arm switching transistor in the second inverter bridge arm in the switching circuit to be in the on-state, and control the lower bridge arm switching transistor in the first inverter bridge arm other than the second inverter bridge arm in the switching circuit to be in the on-state, so as to form the discharge path through which the battery discharges electricity to the motor, and leave the motor to be in the stator winding energy storage stage.

In some embodiments, when it is detected that a running state of the motor meets a preset freewheeling condition, the controller controls the upper bridge arm switching transistor turned on in the second inverter bridge arm to switch to the off-state, so as to cut off the discharge path through which the battery discharges electricity to the motor, and leave the motor to be in the stator winding freewheeling stage.

In some embodiments, when it is detected that a duration of a freewheeling stage exceeds a preset freewheeling duration, the controller controls the lower bridge arm switching transistor turned on in the first inverter bridge arm to switch to the off-state, so as to form a charge path through which the motor charges the battery, and leave the motor to be in the stator winding discharge stage to heat the battery.

In some embodiments, after it is detected that energy stored in the stator winding of the motor is fully released, the controller controls the lower bridge arm switching transistor in the first inverter bridge arm to keep in the off-state, so as to form the energy oscillation path between the capacitor in the heating circuit and the battery, and leave the motor to be in the stator winding current interruption stage.

In some embodiments, the controller 104 is further configured to: determine the second inverter bridge arm based on a rotor position of the motor.

In some embodiments, the controller 104 is specifically configured to:
obtain spatial vector data, where the switching state spatial vector data includes a plurality of spatial sectors, and each spatial sector corresponds to different switching state information;
determine a first spatial sector in which a rotor of the motor is located, and a second spatial sector symmetrical to the first spatial sector; and
determine the second inverter bridge arm based on the switching state information corresponding to the first spatial sector and the second spatial sector.

In some embodiments, the switching circuit 102 includes: a neutral bridge arm disposed between a neutral wire of the motor and the battery, three inverter bridge arms disposed between a three-phase stator winding of the motor and the battery, and a capacitor connected in parallel to the three inverter bridge arms. A first end of each inverter bridge arm and a first end of the neutral bridge arm each are connected to a positive electrode of the battery. A second end of each inverter bridge arm and a second end of the neutral bridge arm each are connected to a negative electrode of the battery. Third ends of the three inverter bridge arms are connected to corresponding phases of the three-phase stator winding of the motor respectively. A third end of the neutral bridge arm is connected to the neutral wire of the motor. Each inverter bridge arm includes an upper bridge arm switching transistor and a lower bridge arm switching transistor. The neutral bridge arm includes an upper bridge arm switching transistor and a lower bridge arm switching transistor.

When the motor is in a stator winding discharge stage, a lower bridge arm switching transistor in a neutral bridge arm in the switching circuit is switched to an off-state; or, an upper bridge arm switching transistor in a neutral bridge arm in the switching circuit is switched to an off-state, so as to form a charge path through which the motor charges the battery, and in turn, transmit electrical energy stored in the motor to the battery.

In some embodiments, when the motor is in a stator winding energy storage stage, the upper bridge arm switching transistor in each inverter bridge arm in the switching circuit is in an on-state, and the lower bridge arm switching transistor in the neutral bridge arm is in the on-state; or, the lower bridge arm switching transistor in each inverter bridge arm in the switching circuit is in an on-state, and the upper bridge arm switching transistor in the neutral bridge arm is in the on-state, so as to form a discharge path through which the battery discharges electricity to the motor, and in turn, transmit electrical energy stored in the battery to the motor.

In some embodiments, when the motor is in a stator winding freewheeling stage, the upper bridge arm switching transistor in each inverter bridge arm is switched to the off-state, and the lower bridge arm switching transistor in the neutral bridge arm keeps in the on-state; or, the lower bridge arm switching transistor in each inverter bridge arm is switched to the off-state, and the upper bridge arm switching transistor in the neutral bridge arm keeps in the on-state, so as to cut off the discharge path through which the battery discharges electricity to the motor.

In some embodiments, when the motor is in a stator winding current interruption stage, the lower bridge arm switching transistor in the neutral bridge arm keeps in the off-state, or the upper bridge arm switching transistor in the neutral bridge arm keeps in the off-state, so as to form an energy oscillation path between the capacitor and the battery.

In some embodiments, the controller 104 is specifically configured to:
control the upper bridge arm switching transistor in each inverter bridge arm to be in the on-state, and control the lower bridge arm switching transistor in the neutral bridge arm to be in the on-state, so as to form the discharge path through which the battery discharges electricity to the motor, and leave the motor to be in the stator winding energy storage stage; or
control the lower bridge arm switching transistor in each inverter bridge arm to be in the on-state, and control the upper bridge arm switching transistor in the neutral bridge arm to be in the on-state, so as to form the discharge path through which the battery discharges electricity to the motor, and leave the motor to be in the stator winding energy storage stage.

In some embodiments, the controller 104 is specifically configured to:
control, when it is detected that a running state of the motor meets a preset freewheeling condition, the upper bridge arm switching transistor in each inverter bridge arm to switch to the off-state, so as to cut off the discharge path through which the battery discharges electricity to the motor, and leave the motor to be in the stator winding freewheeling stage; or
control, when it is detected that a running state of the motor meets a preset freewheeling condition, the lower bridge arm switching transistor in each inverter bridge arm to switch to the off-state, so as to cut off the discharge path through which the battery discharges electricity to the motor, and leave the motor to be in the stator winding freewheeling stage.

In some embodiments, the controller 104 is specifically configured to:
control, when it is detected that a duration of a freewheeling stage exceeds a preset freewheeling duration, the lower bridge arm switching transistor in the neutral bridge arm to switch to the off-state, so as to form a charge path through which the motor charges the battery, and leave the motor to be in the stator winding discharge stage; or
control, when it is detected that a duration of a freewheeling stage exceeds a preset freewheeling duration, the upper bridge arm switching transistor in the neutral bridge arm to switch to the off-state, so as to form a charge path through which the motor charges the battery, and leave the motor to be in the stator winding discharge stage.

In some embodiments, the controller 104 is specifically configured to:
control, after it is detected that energy stored in the stator winding of the motor is fully released, the lower bridge arm switching transistor in the neutral bridge arm to keep in the off-state, so as to form the energy oscillation path between the capacitor and the battery, and leave the motor to be in the stator winding current interruption stage; or
control, after it is detected that energy stored in the stator winding of the motor is fully released, the upper bridge arm switching transistor in the neutral bridge arm to keep in the off-state, so as to form the energy oscillation path between the capacitor and the battery, and leave the motor to be in the stator winding current interruption stage.

In some embodiments, the switching transistor 102 in the switching circuit includes an insulated gate bipolar transistor IGBT or a silicon carbide transistor.

In some embodiments, the controller 104 is specifically configured to:
generate the heating enable signal when it is detected that a battery heating condition is met and the motor is in a non-operating state; or
receive the heating enable signal sent by a vehicle controller, where the heating enable signal is sent by the vehicle controller when the vehicle controller receives a heating request sent by a battery management system BMS and detects that the motor is in a non-operating state.

In some embodiments, the controller 104 is further configured to:
control, when it is detected that a temperature of the battery is abnormal or a temperature of the battery reaches a preset temperature, the switching transistor in the switching circuit to be in an off-state; or
control, when a battery temperature abnormality signal or a heating stop enable signal sent by a vehicle controller is received, the switching transistor in the switching circuit to be in an off-state.

The battery heating circuit according to this embodiment of this application may be used to implement the technical solutions in the battery heating method embodiment disclosed herein above. The implementation principles and technical effects of the battery heating circuit are similar to those of the method embodiment, the details of which are omitted here.

In some embodiments, this application further provides an electrical device. The electrical device includes the battery heating circuit disclosed in the above embodiments. The implementation principles and technical effects of the electrical device are similar, the details of which are omitted here.

As an example, the electrical device according to an embodiment of this application may be, but is not limited to, an electric power cart, an electric vehicle, or the like.

A person of ordinary skill in the art may understand that all or some of the processes of the methods in the foregoing embodiments may be implemented by a computer program instructing relevant hardware. The computer program may be stored in a nonvolatile computer-readable storage medium. When executed, the computer program can perform processes that include the foregoing method embodiments. Any reference to a memory, a database, or another medium used in each embodiment of this application may include at least one of a non-volatile memory or a volatile memory. Non-volatile memories may include read-only memory (Read-Only Memory, ROM), magnetic tape, floppy disk, flash memory, optical memory, high-density embedded non-volatile memory, resistive switching random-access memory (ReRAM), magnetoresistive random-access memory (Magnetoresistive Random Access Memory (MRAM), ferroelectric random-access memory (Ferroelectric Random Access Memory, FRAM), phase change memory (Phase Change Memory, PCM), graphene memory, or the like. Volatile memories may include a random-access memory (Random Access Memory, RAM), an external cache, or the like. Illustratively rather than restrictively, the RAM is in diverse forms, such as a static random access memory (Static Random Access Memory, SRAM) or a dynamic random access memory (Dynamic Random Access Memory, DRAM). The processor mentioned in each embodiment of this application may be, but is not limited to, a general-purpose processor, central processing unit, graphics processing unit, digital signal processor, programmable logic device, quantum computing-based data processing logic device, or the like.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery heating method, wherein the method comprises:
obtaining a heating enable signal, wherein the heating enable signal is used for instructing a motor to heat a battery based on a heating circuit, and the heating circuit comprises the motor and a switching circuit connected separately to the motor and the battery; and
controlling an on-off state of a switching transistor in the switching circuit in response to the heating enable signal so that the motor heats the battery while keeping a current direction unchanged in each phase of stator winding of the motor.

2. The method according to claim 1, wherein a current in each phase of the stator winding changes cyclically, and a current cycle of each phase of the stator winding comprises: a stator winding energy storage stage in which the current increases gradually, a stator winding freewheeling stage in which the current remains constant, a stator winding discharge stage in which the current decreases gradually, and a stator winding current interruption stage in which the current is zero.

3. The method according to claim 2, wherein, in the stator winding current interruption stage in which the current is zero, the battery is charged by a capacitor in the heating circuit, and the capacitor is connected in series between two terminals of the battery.

4. The method according to any one of claims 1 to 3, wherein a current in each phase of the stator winding is a half-wave current.

5. The method according to any one of claims 1 to 4, wherein, when the motor is in a stator winding discharge stage, a lower bridge arm switching transistor in a first inverter bridge arm in the switching circuit is switched to an off-state to form a charge path through which the motor charges the battery, so as to transmit electrical energy stored in the motor to the battery, and the first inverter bridge arm is a bridge arm in which the lower bridge arm switching transistor in the switching circuit is in the on-state when the motor is in a stator winding energy storage stage.

6. The method according to claim 5, wherein, when the motor is in the stator winding energy storage stage, an upper bridge arm switching transistor in a second inverter bridge arm in the switching circuit is in an on-state, and the lower bridge arm switching transistor in the first inverter bridge arm other than the second inverter bridge arm in the switching circuit is in the on-state, so as to form a discharge path through which the battery discharges electricity to the motor, and in turn, transmit electrical energy stored in the battery to the motor.

7. The method according to claim 6, wherein, when the motor is in a stator winding freewheeling stage, the upper bridge arm switching transistor in the second inverter bridge arm is switched to the off-state, and the lower bridge arm switching transistor in the first inverter bridge arm keeps in the on-state, so as to cut off the discharge path through which the battery discharges electricity to the motor.

8. The method according to any one of claims 5 to 7, wherein, when the motor is in a stator winding current interruption stage, the lower bridge arm switching transistor in the first inverter bridge arm keeps in the off-state, so as to form an energy oscillation path between the capacitor in the heating circuit and the battery.

9. The method according to claim 6, wherein the controlling an on-off state of a switching transistor in the switching circuit in response to the heating enable signal comprises:
controlling the upper bridge arm switching transistor in the second inverter bridge arm in the switching circuit to be in the on-state, and controlling the lower bridge arm switching transistor in the first inverter bridge arm other than the second inverter bridge arm in the switching circuit to be in the on-state, so as to form the discharge path through which the battery discharges electricity to the motor, and leave the motor to be in the stator winding energy storage stage.

10. The method according to claim 7, wherein the controlling an on-off state of a switching transistor in the switching circuit in response to the heating enable signal comprises:
controlling, when it is detected that a running state of the motor meets a preset freewheeling condition, the upper bridge arm switching transistor turned on in the second inverter bridge arm to switch to the off-state, so as to cut off the discharge path through which the battery discharges electricity to the motor, and leave the motor to be in the stator winding freewheeling stage.

11. The method according to claim 5, wherein the controlling an on-off state of a switching transistor in the switching circuit in response to the heating enable signal comprises:
controlling, when it is detected that a duration of a freewheeling stage exceeds a preset freewheeling duration, the lower bridge arm switching transistor turned on in the first inverter bridge arm to switch to the off-state, so as to form a charge path through which the motor charges the battery, and leave the motor to be in the stator winding discharge stage.

12. The method according to claim 8, wherein the controlling an on-off state of a switching transistor in the switching circuit in response to the heating enable signal comprises:
controlling, after it is detected that energy stored in the stator winding of the motor is fully released, the lower bridge arm switching transistor in the first inverter bridge arm to keep in the off-state, so as to form the energy oscillation path between the capacitor in the heating circuit and the battery, and leave the motor to be in the stator winding current interruption stage.

13. The method according to claim 9, wherein, before the controlling the upper bridge arm switching transistor in the second inverter bridge arm in the switching circuit to be in the on-state, and controlling the lower bridge arm switching transistor in the first inverter bridge arm other than the second inverter bridge arm in the switching circuit to be in the on-state, the method further comprises:
determining the second inverter bridge arm based on a rotor position of the motor.

14. The method according to claim 13, wherein the determining the second inverter bridge arm based on a rotor position of the motor comprises:
obtaining spatial vector data, wherein the switching state spatial vector data comprises a plurality of spatial sectors, and each spatial sector corresponds to different switching state information;
determining a first spatial sector in which a rotor of the motor is located, and a second spatial sector symmetrical to the first spatial sector; and
determining the second inverter bridge arm based on the switching state information corresponding to the first spatial sector and the second spatial sector.

15. The method according to any one of claims 1 to 4, wherein, when the motor is in a stator winding discharge stage, a lower bridge arm switching transistor in a neutral bridge arm in the switching circuit is switched to an off-state; or, an upper bridge arm switching transistor in a neutral bridge arm in the switching circuit is switched to an off-state, so as to form a charge path through which the motor charges the battery, and in turn, transmit electrical energy stored in the motor to the battery.

16. The method according to claim 15, wherein, when the motor is in a stator winding energy storage stage, the upper bridge arm switching transistor in each inverter bridge arm in the switching circuit is in an on-state, and the lower bridge arm switching transistor in the neutral bridge arm is in the on-state; or, the lower bridge arm switching transistor in each inverter bridge arm in the switching circuit is in an on-state, and the upper bridge arm switching transistor in the neutral bridge arm is in the on-state, so as to form a discharge path through which the battery discharges electricity to the motor, and in turn, transmit electrical energy stored in the battery to the motor.

17. The method according to claim 16, wherein, when the motor is in a stator winding freewheeling stage, the upper bridge arm switching transistor in each inverter bridge arm is switched to the off-state, and the lower bridge arm switching transistor in the neutral bridge arm keeps in the on-state; or, the lower bridge arm switching transistor in each inverter bridge arm is switched to the off-state, and the upper bridge arm switching transistor in the neutral bridge arm keeps in the on-state, so as to cut off the discharge path through which the battery discharges electricity to the motor.

18. The method according to any one of claims 15 to 17, wherein, when the motor is in a stator winding current interruption stage, the lower bridge arm switching transistor in the neutral bridge arm keeps in the off-state, or the upper bridge arm switching transistor in the neutral bridge arm keeps in the off-state, so as to form an energy oscillation path between the capacitor and the battery.

19. The method according to claim 16, wherein the controlling an on-off state of a switching transistor in the switching circuit in response to the heating enable signal comprises:
controlling the upper bridge arm switching transistor in each inverter bridge arm to be in the on-state, and controlling the lower bridge arm switching transistor in the neutral bridge arm to be in the on-state, so as to form the discharge path through which the battery discharges electricity to the motor, and leave the motor to be in the stator winding energy storage stage; or
controlling the lower bridge arm switching transistor in each inverter bridge arm to be in the on-state, and controlling the upper bridge arm switching transistor in the neutral bridge arm to be in the on-state, so as to form the discharge path through which the battery discharges electricity to the motor, and leave the motor to be in the stator winding energy storage stage.

20. The method according to claim 17, wherein the controlling an on-off state of a switching transistor in the switching circuit in response to the heating enable signal comprises:
controlling, when it is detected that a running state of the motor meets a preset freewheeling condition, the upper bridge arm switching transistor in each inverter bridge arm to switch to the off-state, so as to cut off the discharge path through which the battery discharges electricity to the motor, and leave the motor to be in the stator winding freewheeling stage; or
controlling, when it is detected that a running state of the motor meets a preset freewheeling condition, the lower bridge arm switching transistor in each inverter bridge arm to switch to the off-state, so as to cut off the discharge path through which the battery discharges electricity to the motor, and leave the motor to be in the stator winding freewheeling stage.

21. The method according to claim 15, wherein the controlling an on-off state of a switching transistor in the switching circuit in response to the heating enable signal comprises:
controlling, when it is detected that a duration of a freewheeling stage exceeds a preset freewheeling duration, the lower bridge arm switching transistor in the neutral bridge arm to switch to the off-state, so as to form a charge path through which the motor charges the battery, and leave the motor to be in the stator winding discharge stage; or
controlling, when it is detected that a duration of a freewheeling stage exceeds a preset freewheeling duration, the upper bridge arm switching transistor in the neutral bridge arm to switch to the off-state, so as to form a charge path through which the motor charges the battery, and leave the motor to be in the stator winding discharge stage.

22. The method according to claim 18, wherein the controlling an on-off state of a switching transistor in the switching circuit in response to the heating enable signal comprises:
controlling, after it is detected that energy stored in the stator winding of the motor is fully released, the lower bridge arm switching transistor in the neutral bridge arm to keep in the off-state, so as to form the energy oscillation path between the capacitor and the battery, and leave the motor to be in the stator winding current interruption stage; or
controlling, after it is detected that energy stored in the stator winding of the motor is fully released, the upper bridge arm switching transistor in the neutral bridge arm to keep in the off-state, so as to form the energy oscillation path between the capacitor and the battery, and leave the motor to be in the stator winding current interruption stage.

23. The method according to any one of claims 1 to 22, wherein the obtaining a heating enable signal comprises:
generating the heating enable signal when it is detected that a battery heating condition is met and the motor is in a non-operating state; or
receiving the heating enable signal sent by a vehicle controller, wherein the heating enable signal is sent by the vehicle controller when the vehicle controller receives a heating request sent by a battery management system BMS and detects that the motor is in a non-operating state.

24. The method according to any one of claims 1 to 22, wherein the method further comprises:
controlling, when it is detected that a temperature of the battery is abnormal or a temperature of the battery reaches a preset temperature, the switching transistor in the switching circuit to be in an off-state.

25. The method according to any one of claims 1 to 22, wherein the method further comprises:
controlling, when a battery temperature abnormality signal or a heating stop enable signal sent by a vehicle controller is received, the switching transistor in the switching circuit to be in an off-state.

26. A battery heating circuit, wherein the battery heating circuit comprises a heating circuit and a controller, wherein the heating circuit comprises a motor and a switching circuit connected separately to the motor and the battery; and
the controller is configured to control, after obtaining a heating enable signal, an on-off state of a switching transistor in the switching circuit in response to the heating enable signal so that the motor heats the battery while keeping a current direction unchanged in each phase of stator winding of the motor, wherein the heating enable signal is used for instructing the motor to heat the battery based on the heating circuit.

27. The battery heating circuit according to claim 26, wherein a current in each phase of the stator winding changes cyclically, and a current cycle of each phase of the stator winding comprises: a stator winding energy storage stage in which the current increases gradually, a stator winding freewheeling stage in which the current remains constant, a stator winding discharge stage in which the current decreases gradually, and a stator winding current interruption stage in which the current is zero.

28. The battery heating circuit according to claim 27, wherein, in the stator winding current interruption stage in which the current is zero, the battery is charged by a capacitor in the heating circuit, and the capacitor is connected in series between two terminals of the battery.

29. The method according to any one of claims 26 to 28, wherein a current in each phase of the stator winding is a half-wave current.

30. The battery heating circuit according to any one of claims 26 to 29, wherein the switching circuit comprises three inverter bridge arms and a capacitor connected in parallel to the three inverter bridge arms, the three inverter bridge arms are disposed between a three-phase stator winding of the motor and the battery, a first end of each inverter bridge arm is connected to a positive electrode of the battery, a second end of each inverter bridge arm is connected to a negative electrode of the battery, third ends of the three inverter bridge arms are connected to corresponding phases of the three-phase stator winding of the motor respectively, and each inverter bridge arm comprises an upper bridge arm switching transistor and a lower bridge arm switching transistor; and
when the motor is in a stator winding discharge stage, the lower bridge arm switching transistor in a first inverter bridge arm in the switching circuit is switched to an off-state to form a charge path through which the motor charges the battery, so as to transmit electrical energy stored in the motor to the battery; and the first inverter bridge arm is a bridge arm in which the lower bridge arm switching transistor in the switching circuit is in an on-state when the motor is in a stator winding energy storage stage.

31. The battery heating circuit according to claim 30, wherein, when the motor is in the stator winding energy storage stage, the upper bridge arm switching transistor in a second inverter bridge arm in the switching circuit is in an on-state, and the lower bridge arm switching transistor in the first inverter bridge arm other than the second inverter bridge arm in the switching circuit is in the on-state, so as to form a discharge path through which the battery discharges electricity to the motor, and in turn, transmit electrical energy stored in the battery to the motor.

32. The battery heating circuit according to claim 31, wherein, when the motor is in a stator winding freewheeling stage, the upper bridge arm switching transistor in the second inverter bridge arm is switched to the off-state, and the lower bridge arm switching transistor in the first inverter bridge arm keeps in the on-state, so as to cut off the discharge path through which the battery discharges electricity to the motor.

33. The battery heating circuit according to any one of claims 30 to 32, wherein, when the motor is in a stator winding current interruption stage, the lower bridge arm switching transistor in the first inverter bridge arm keeps in the off-state, so as to form an energy oscillation path between the capacitor in the heating circuit and the battery.

34. The battery heating circuit according to claim 31, wherein the controller is specifically configured to:
control the upper bridge arm switching transistor in the second inverter bridge arm in the switching circuit to be in the on-state, and control the lower bridge arm switching transistor in the first inverter bridge arm other than the second inverter bridge arm in the switching circuit to be in the on-state, so as to form the discharge path through which the battery discharges electricity to the motor, and leave the motor to be in the stator winding energy storage stage.

35. The battery heating circuit according to claim 32, wherein the controller is specifically configured to:
control, when it is detected that a running state of the motor meets a preset freewheeling condition, the upper bridge arm switching transistor turned on in the second inverter bridge arm to switch to the off-state, so as to cut off the discharge path through which the battery discharges electricity to the motor, and leave the motor to be in the stator winding freewheeling stage.

36. The battery heating circuit according to claim 30, wherein the controller is specifically configured to:
control, when it is detected that a duration of a freewheeling stage exceeds a preset freewheeling duration, the lower bridge arm switching transistor turned on in the first inverter bridge arm to switch to the off-state, so as to form a charge path through which the motor charges the battery, and leave the motor to be in the stator winding discharge stage to heat the battery.

37. The battery heating circuit according to claim 33, wherein the controller is specifically configured to: control, after it is detected that energy stored in the stator winding of the motor is fully released, the lower bridge arm switching transistor in the first inverter bridge arm to keep in the off-state, so as to form the energy oscillation path between the capacitor in the heating circuit and the battery, and leave the motor to be in the stator winding current interruption stage.

38. The battery heating circuit according to claim 34, wherein the controller is further configured to:
determine the second inverter bridge arm based on a rotor position of the motor.

39. The battery heating circuit according to claim 38, wherein the controller is specifically configured to:
obtain spatial vector data, wherein the switching state spatial vector data comprises a plurality of spatial sectors, and each spatial sector corresponds to different switching state information;
determine a first spatial sector in which a rotor of the motor is located, and a second spatial sector symmetrical to the first spatial sector; and
determine the second inverter bridge arm based on the switching state information corresponding to the first spatial sector and the second spatial sector.

40. The battery heating circuit according to any one of claims 26 to 29, wherein the switching circuit comprises: a neutral bridge arm disposed between a neutral wire of the motor and the battery, three inverter bridge arms disposed between a three-phase stator winding of the motor and the battery, and a capacitor connected in parallel to the three inverter bridge arms; a first end of each inverter bridge arm and a first end of the neutral bridge arm each are connected to a positive electrode of the battery, a second end of each inverter bridge arm and a second end of the neutral bridge arm each are connected to a negative electrode of the battery, third ends of the three inverter bridge arms are connected to corresponding phases of the three-phase stator winding of the motor respectively, and a third end of the neutral bridge arm is connected to the neutral wire of the motor; and each inverter bridge arm comprises an upper bridge arm switching transistor and a lower bridge arm switching transistor, and the neutral bridge arm comprises an upper bridge arm switching transistor and a lower bridge arm switching transistor; and
when the motor is in a stator winding discharge stage, a lower bridge arm switching transistor in a neutral bridge arm in the switching circuit is switched to an off-state; or, an upper bridge arm switching transistor in a neutral bridge arm in the switching circuit is switched to an off-state, so as to form a charge path through which the motor charges the battery, and in turn, transmit electrical energy stored in the motor to the battery.

41. The battery heating circuit according to claim 40, wherein, when the motor is in a stator winding energy storage stage, the upper bridge arm switching transistor in each inverter bridge arm in the switching circuit is in an on-state, and the lower bridge arm switching transistor in the neutral bridge arm is in the on-state; or, the lower bridge arm switching transistor in each inverter bridge arm in the switching circuit is in an on-state, and the upper bridge arm switching transistor in the neutral bridge arm is in the on-state, so as to form a discharge path through which the battery discharges electricity to the motor, and in turn, transmit electrical energy stored in the battery to the motor.

42. The battery heating circuit according to claim 41, wherein, when the motor is in a stator winding freewheeling stage, the upper bridge arm switching transistor in each inverter bridge arm is switched to the off-state, and the lower bridge arm switching transistor in the neutral bridge arm keeps in the on-state; or, the lower bridge arm switching transistor in each inverter bridge arm is switched to the off-state, and the upper bridge arm switching transistor in the neutral bridge arm keeps in the on-state, so as to cut off the discharge path through which the battery discharges electricity to the motor.

43. The battery heating circuit according to any one of claims 40 to 42, wherein, when the motor is in a stator winding current interruption stage, the lower bridge arm switching transistor in the neutral bridge arm keeps in the off-state, or the upper bridge arm switching transistor in the neutral bridge arm keeps in the off-state, so as to form an energy oscillation path between the capacitor and the battery.

44. The battery heating circuit according to claim 41, wherein the controller is specifically configured to:
control the upper bridge arm switching transistor in each inverter bridge arm to be in the on-state, and control the lower bridge arm switching transistor in the neutral bridge arm to be in the on-state, so as to form the discharge path through which the battery discharges electricity to the motor, and leave the motor to be in the stator winding energy storage stage; or
control the lower bridge arm switching transistor in each inverter bridge arm to be in the on-state, and control the upper bridge arm switching transistor in the neutral bridge arm to be in the on-state, so as to form the discharge path through which the battery discharges electricity to the motor, and leave the motor to be in the stator winding energy storage stage.

45. The battery heating circuit according to claim 42, wherein the controller is specifically configured to:
control, when it is detected that a running state of the motor meets a preset freewheeling condition, the upper bridge arm switching transistor in each inverter bridge arm to switch to the off-state, so as to cut off the discharge path through which the battery discharges electricity to the motor, and leave the motor to be in the stator winding freewheeling stage; or
control, when it is detected that a running state of the motor meets a preset freewheeling condition, the lower bridge arm switching transistor in each inverter bridge arm to switch to the off-state, so as to cut off the discharge path through which the battery discharges electricity to the motor, and leave the motor to be in the stator winding freewheeling stage.

46. The battery heating circuit according to claim 40, wherein the controller is specifically configured to:
control, when it is detected that a duration of a freewheeling stage exceeds a preset freewheeling duration, the lower bridge arm switching transistor in the neutral bridge arm to switch to the off-state, so as to form a charge path through which the motor charges the battery, and leave the motor to be in the stator winding discharge stage; or
control, when it is detected that a duration of a freewheeling stage exceeds a preset freewheeling duration, the upper bridge arm switching transistor in the neutral bridge arm to switch to the off-state, so as to form a charge path through which the motor charges the battery, and leave the motor to be in the stator winding discharge stage.

47. The battery heating circuit according to claim 43, wherein the controller is specifically configured to:
control, after it is detected that energy stored in the stator winding of the motor is fully released, the lower bridge arm switching transistor in the neutral bridge arm to keep in the off-state, so as to form the energy oscillation path between the capacitor and the battery, and leave the motor to be in the stator winding current interruption stage; or
control, after it is detected that energy stored in the stator winding of the motor is fully released, the upper bridge arm switching transistor in the neutral bridge arm to keep in the off-state, so as to form the energy oscillation path between the capacitor and the battery, and leave the motor to be in the stator winding current interruption stage.

48. The battery heating circuit according to any one of claims 26 to 47, wherein the switching transistor in the switching circuit comprises an insulated gate bipolar transistor IGBT or a silicon carbide transistor.

49. The battery heating circuit according to any one of claims 26 to 47, wherein the controller is specifically configured to:
generate the heating enable signal when it is detected that a battery heating condition is met and the motor is in a non-operating state; or
receive the heating enable signal sent by a vehicle controller, wherein the heating enable signal is sent by the vehicle controller when the vehicle controller receives a heating request sent by a battery management system BMS and detects that the motor is in a non-operating state.

50. The battery heating circuit according to any one of claims 26 to 47, wherein the controller is further configured to:
control, when it is detected that a temperature of the battery is abnormal or a temperature of the battery reaches a preset temperature, the switching transistor in the switching circuit to be in an off-state; or
control, when a battery temperature abnormality signal or a heating stop enable signal sent by a vehicle controller is received, the switching transistor in the switching circuit to be in an off-state.

51. An electrical device, wherein the electrical device comprises the battery heating circuit according to any one of claims 26 to 50.
